(19) Europäisches Patentamt
European Patent Office
Office européen des brevets

(11) **EP 3 957 704 A1**

(12) **EUROPEAN PATENT APPLICATION**

(43) Date of publication:
**23.02.2022 Bulletin 2022/08**

(21) Application number: **20192241.6**

(22) Date of filing: **21.08.2020**

(51) International Patent Classification (IPC):
*C10G 45/04* (2006.01)   *C10G 47/02* (2006.01)
*C10G 49/02* (2006.01)   *B01J 35/12* (2006.01)
*B01J 27/14* (2006.01)   *E21B 43/00* (2006.01)

(52) Cooperative Patent Classification (CPC):
**C10G 45/04; B01J 31/00; C10G 47/02;
C10G 49/02; E21B 43/16;** C10G 2300/70

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VITO NV
2400 Mol (BE)**

(72) Inventor: **The designation of the inventor has not
yet been filed**

(74) Representative: **AWA Benelux
Avenue Josse Goffin 158
1082 Bruxelles (BE)**

(54) **METHOD FOR HYDROPROCESSING AN ORGANIC COMPOUND, AND CATALYSTS THEREFOR**

(57)    The present invention is related to a method for the hydroprocessing of an organic compound, comprising subjecting the organic compound to a hydroprocessing reaction in the presence of hydrogen and a catalyst, wherein the catalyst comprises a fluoride-free ionic liquid.

Fig. 1

## Description

### Technical field

The present invention relates to a method for hydroprocessing an organic compound, such as a hydrocarbon, in particular a heavy or extra heavy hydrocarbon, in the presence of hydrogen and a catalyst. The invention further relates to catalysts for the hydroprocessing of organic compounds.

### Background art

Several organic compounds, in particular hydrocarbons, such as heavy hydrocarbons and extra heavy hydrocarbons, are compounds of interest for, amongst others, fuels. Heavy crude oil reserves (API gravity < 22.3°) and extra heavy crude oil reserves (API gravity < 10°) are considered as a secure and strategic source of hydrocarbons. However, their low specific gravity (API), related to their high carbon-to-hydrogen ratio (typically 8 or even larger), their high ratio of aromatics-to-paraffins and naphthenes-to-paraffins, their lower proportion of volatile compounds and the presence of higher amounts of nitrogen, sulphur, oxygen and heavy metals (nickel, vanadium) contribute to an intricate combustion of the fuels derived therefrom and to significant environmental impacts.

Further, such organic compounds, and in particular heavy and extra heavy hydrocarbons, may be difficult to extract from underground oil reservoirs (oil wells) and transport and pump, e.g. through pipelines, because of their very high viscosity and poor fluidity. There is a significant risk of pipeline fouling and blocking, leading to the need for extensive heating. Hence, extraction, transportation and processing of these organic compounds is energy consuming.

Several methods exist to address the extraction/transportation difficulties (viscosity). Examples are vapour injection, injection of steam and water at high temperature, $CO_2$ injection enhanced oil recovery, polymer injection, low-salinity water injection, steam assisted gravity drainage, toe-to-heel air injection (THAI), catalytic upgrading process in situ (CAPRI), a combined version of THAI and CAPRI (CAPRI-THAI), open-pit mining, and chemically-enhanced oil recovery. Several of these processes make use of a catalyst, for example a catalyst in solid form. WO 2012/040358 discloses the use of hydrogen donor additives to improve the quality of heavy oil and extra heavy oil deposits.

However, these methods have drawbacks such as high energy consumption due to heating, the deactivation of the solid catalyst due to deposition of asphaltenes, coke and metals (e.g. for the CAPRI process) or polymer decomposition, or, for those technologies using solvents, a difficult solvent recovery.

Non-thermal methods include microbially-enhanced oil recovery and cyclic solvent processing. Drawbacks are thermal and chemical liability, as well as solubility and processing rates. Other methods include injection of air into the reservoir of the organic compound, e.g. the oil well. This creates an internal fire front to burn heavier hydrocarbons and degrade them into lighter components which can be easily pumped out. This technique is referred to as in situ combustion.

Although the above-mentioned methods address the difficult transportation, none of them is capable of simultaneously upgrading the physical and chemical properties of the organic compounds to obtain components with a higher value, in combination with improved rheological properties - viscosity and mobility - as well as a reduction of the content of impurities, such as sulphur, nitrogen and metals.

For upgrading of the physical and chemical properties of the organic compounds, methods such as reducing interfacial tension, altering wettability or vaporization of selected products from the organic compounds are known. Such methods use one or more of surfactants, polymers, acids, gases, salts and solvents. Several of the solvents used for this application are volatile and/or toxic, and are often difficult to recover and/or recycle.

A method of particular interest for answering to the above-mentioned combination of rheological and impurity content requirements is hydroprocessing. A hydroprocessing reaction is a reaction wherein the organic compounds are subjected to a treatment in the presence of hydrogen and a catalyst.

Commonly employed catalysts for hydroprocessing of organic compounds, especially in refineries are heterogeneous catalysts. Particular catalysts of interest are alumina-supported heterogeneous catalysts like $NiMoS/Al_2O_3$ and $CoMoS/Al_2O_3$. Heterogeneous catalysts can be solid catalysts, and may have the drawback that they may obstruct (clog) the rock porosity in the (oil) reservoir, and are prone to agglomeration. The heterogeneous catalyst as such may suffer from poor dispersion of metal ions, blocking of the pores of the catalyst and reduction of the active surface area. Consequently, the use of such heterogeneous catalysts for the in-situ treatment of organic compounds is limited.

Other types of catalysts advantageously used in hydroprocessing are metal catalysts. A solvent is advantageously added. Metal catalysts often contain fluoride because of its high stability at high temperature. However, fluoride is highly polluting and corrosive, and is thus not environmentally friendly.

US 8,758,600 describes the use of ionic liquids as solvent, in combination with water and hydrogen for the desulphurization or denitrification of diesel oils. US 8,821,716 describes the use of imidazolium-based and pyridinium-based ionic liquids comprising Fe(III) halide as solvent for the desulphurization of oil. CA 2708416 discloses the use of ionic liquid solvents and organic solvents to reduce the viscosity of oil.

## Summary of the invention

There is thus a need for an improved method that allows to fulfil a combination of requirements:

- a solution to transportation issues of the organic compounds, such as fouling and blocking of the pipelines and transportation tubes, and the high energy consumption for transportation,
- upgrading of the organic compound, particularly in terms of its physical and/or chemical properties, to obtain components of higher value,
- improvement of the rheological properties, preferably viscosity and mobility, which may contribute to easier extraction, pumping and transportation,
- a reduction of the content of impurities, such as sulphur, nitrogen and metals.

It is an aim of the present invention to provide methods for the hydroprocessing of organic compounds, in particular a hydrocarbon or a mixture of hydrocarbons, such as petroleum, allowing to meet one or more of the above requirements.

It is a particular aim of the invention to convert organic compounds by means of hydroprocessing into compounds having an improved value, thereby solving the problems and difficulties encountered with the methods of the state of the art.

It is an aim of the present invention to provide a method for the hydroprocessing of heavy and extra heavy hydrocarbons, such as heavy and extra heavy crude oil, thereby solving the issues of the methods used in the state of the art, in particular the chemical composition, the physical and the rheological properties.

According to the invention, there is therefore provided a method as set out in the appended claims.

A method for the hydroprocessing of an organic compound as disclosed herein comprises subjecting the organic compound to a hydroprocessing reaction in the presence of hydrogen and a catalyst. The catalyst comprises a fluoride-free ionic liquid.

The organic compound comprises advantageously a hydrocarbon or a mixture of hydrocarbons, such as heavy hydrocarbons or extra heavy hydrocarbons. The organic compound may be a heavy crude oil or an extra heavy crude oil.

The fluoride-free ionic liquid is advantageously a phosphonium based ionic liquid.

The phosphonium based ionic liquid may comprise a phosphonium cation of the type $[P_{R1,R2,R3,R4}]^+$, wherein R1, R2, R3 and R4 are independently a hydrocarbon group. Explained differently, R1, R2, R3 and R4 are hydrocarbon groups or hydrocarbon moieties which may be the same or different. The hydrocarbon group advantageously independently comprises a hydrocarbon main chain comprising between 1 and 25, preferably between 1 and 20, more preferably between 1 and 16 carbon atoms. Explained differently, R1, R2, R3 and R4 may independently of each other comprise a hydrocarbon main chain comprising between 1 and 25, preferably between 1 and 20, more preferably between 1 and 16 carbon atoms.

The ionic liquid advantageously comprises a metal chloride anion. The metal is advantageously selected from the group of transition metals, and is preferably Ni, Co or Fe.

The fluoride-free phosphonium based ionic liquid is advantageously selected from the group consisting of trihexyltetradecylphosphonium iron tetrachloride ($[P_{66614}][FeCl_4]$), bis(trihexyltetradecylphosphonium) nickel tetrachloride ($[P_{66614}]_2[NiCl_4]$) and bis(trihexyltetradecylphosphonium) cobalt tetrachloride ($[P_{66614}]_2[CoCl_4]$).

The hydroprocessing reaction in methods of the present invention may be carried out in a wide pressure range but is advantageously performed at a pressure between 20 bar and 200 bar. Preferably, the pressure is between 30 bar and 100 bar, more preferably between 50 bar and 85 bar.

The hydroprocessing reaction in methods of the present invention may be carried out at a temperature within a wide temperature range, but is advantageously performed at a temperature between 250 °C and 500 °C. Preferably, the temperature is between 320 °C and 380 °C, more preferably between 345 °C and 375 °C.

The hydroprocessing reaction is advantageously carried out with a mass ratio of ionic liquid to the organic compound between 0.01 g per kg and 100 g per kg. Preferably, the mass ratio of ionic liquid to the organic compound is between 0.1 g per kg and 50 g per kg, more preferably between 0.5 g and 20 g per kg, and most preferably between 1 g per kg and 5 g per kg.

When the organic compound comprises a hydrocarbon or a mixture of hydrocarbons, hydrogen and the hydrocarbon or the mixture of hydrocarbons are supplied to the hydroprocessing reaction in proportions ($H_2/C_nH_{2n+x}$ wherein x ranges from -36 to +2) of advantageously at least 3.5 to 100 parts by weight hydrogen to hydrocarbon (mixture).

The hydroprocessing reaction may be selected from the group consisting of hydrocracking, hydrodesulphurization, hydrodenitrogenation, hydrodemetallization, hydrogenation, or a combination thereof.

When the organic compound is a heavy crude oil or an extra heavy crude oil, the hydroprocessing reaction is advantageously performed in an oil well after pumping of the crude oil.

When the organic compound is a heavy crude oil or an extra heavy crude oil, the method of the invention advantageously comprises the steps of at least partially extracting the organic compound from the oil well, hydroprocessing of the extracted organic compound to obtain a hydroprocessed oil or a hydroprocessed organic compound, and, optionally, injection of the hydroprocessed oil back into the oil well.

Methods of the present invention allow to convert an organic compound into one or more reaction products, referred to as hydroprocessed organic compounds. The reaction products can comprise a liquid phase only or a combination of a liquid phase and one or more of a gas phase and a solid phase. The one or more hydroprocessed organic compounds, preferably those present in the liquid phase and/or the gas phase, advantageously have a shorter chain length and/or a lower molecular weight when compared to the organic compound that is subjected to hydroprocessing.

The one or more short and/or light hydroprocessed organic compounds may contribute to a reduction of the viscosity, compared to the organic compound that is subjected to hydroprocessing. A lower viscosity facilitates extraction, transportation and processing, advantageously reducing the energy consumption for extraction, transportation and processing, and advantageously reducing the risk to fouling and clogging of pipelines.

The chemical composition of the one or more reaction products can be modified or influenced by the processing conditions, allowing to obtain one or more reaction products of interest, such as aliphatic components, and in particular alkanes.

## Brief description of the figures

The invention will now be described in more detail with reference to the appended drawings, wherein same reference numerals illustrate same features.

Figure 1 represents a schematic representation of a preferred cation of the ionic liquid catalyst.
Figure 2 and Figure 3 represent the fraction gaseous phase and liquid phase in the reaction product after hydroprocessing of n-dodecane using different catalysts.

## Description of embodiments

According to the present invention, a method for the hydroprocessing of an organic compound is disclosed. The organic compound is subjected to a hydroprocessing reaction in the presence of hydrogen and a catalyst.

According to an aspect of the present invention, the catalyst comprises an ionic liquid. The ionic liquid is advantageously a fluoride-free ionic liquid. According to a preferred embodiment, the catalyst comprises a fluoride-free ionic liquid. With fluoride free is meant that the concentration of fluoride in the catalyst is maximum 500 ppm, preferably maximum 100 ppm.

The organic compound can be a hydrocarbon or a mixture of hydrocarbons. The hydrocarbon can be a saturated hydrocarbon. The hydrocarbon can be an unsaturated hydrocarbon, in particular comprising one or more unsaturated covalent bonds. The hydrocarbon is advantageously a hydrocarbon according to $C_nH_{2n+x}$, wherein x ranges from -36 to +2, and the hydrocarbon is identified by a CAS number. The hydrocarbon can be a mixture of one or more saturated hydrocarbons and one or more unsaturated hydrocarbons, as described above.

The hydrocarbon used as organic compound in methods according to the present invention can be aliphatic. Aliphatic hydrocarbons may be linear, for example a non-branched alkane, may be branched, for example a branched alkane such as an iso-alkane, and may be cyclic, for example a cyclic alkane. The hydrocarbon may be aromatic, such as aromatic naphtha or polyaromatic.

The hydrocarbon used as organic compound in methods according to the present invention can be a heavy hydrocarbon or an extra heavy hydrocarbon. In the context of the present invention, a heavy hydrocarbon refers to a hydrocarbon having up to 60 carbon atoms, and at least 15 carbon atoms, such as 40 carbon atoms. In the context of the present invention, an extra heavy hydrocarbon refers to a hydrocarbon having at least 60 carbon atoms, such as at least 66 carbon atoms, or even at least 80 carbon atoms.

The organic compound may be a crude oil. The crude oil is advantageously a heavy crude oil or an extra heavy crude oil. In the context of the present invention, heavy crude oil refers to a liquid petroleum having an API gravity (American Petroleum Institute gravity) less than 20° (°API). In the context of the present invention, extra heavy crude oil refers to a liquid petroleum having an API gravity less than 10° (°API), with a lower limit of 4° (°API). The API gravity can be measured according to ASTM D287, wherein the gravity is determined at 15.56 °C (60 °F).

Crude oil is typically a mixture of a hydrocarbon fraction, comprising a hydrocarbon or a mixture of hydrocarbons, and a non-hydrocarbon fraction. The non-hydrocarbon fraction may comprise one or more resins, such as carbazole, thiophene and oxygenated hydrocarbons, and asphalthene, and may comprise additional elements, such as nitrogen, sulphur and oxygen. The hydrocarbon or hydrocarbon mixture in crude oil is advantageously a heavy hydrocarbon or an extra heavy hydrocarbon. The hydrocarbon is advantageously as described above.

Heavy and extra heavy crude oils, and in particular heavy and extra heavy hydrocarbons, can be defined as so-called "dense, non-aqueous phase liquids" (DNAPLs). DNAPLs typically are immiscible to insoluble in water, and have a viscosity higher than the viscosity of water and a density higher than the density of water.

The organic compound may comprise one or more impurities. An impurity may be water, a sulphur compound, oxygen, nitrogen, carbon dioxide and traces of metals.

Organic compounds of particular interest are, without being limited thereto, n-dodecane (so-called "model fuel"), light crude oil, thiophene, an organometallic compound, pyridine, quinoline, aromatics of oil components, and petroleum. Petroleum is typically considered as a heavy crude oil or extra heavy crude oil and may comprise a mixture of hydrocarbons, one or more resins, and asphalthene. Petroleum may further comprise one or more impurities.

Ionic liquids are used in the state of the art as a solvent in the hydroprocessing reaction to dilute, without participating in the hydroprocessing reaction itself, and are named 'designer solvents', because their properties can be tailored based on the requirements of a particular reaction, such as a hydroprocessing reaction.

An ionic liquid is a liquid that comprises at least one cation and at least one anion, and shows high solvent capabilities for organic, inorganic, and polymeric compounds (including biopolymers). Ionic liquids usually present low (if any) volatility. The low volatility results, in comparison to more traditional solvents, in a large reduction to even the absence of solvent vapour in the surrounding atmosphere, which may reduce significantly the risk for explosion and any toxic effects. Ionic liquids, when selected carefully, tend to have a high performance in relation to their solvent properties and sustainability. Further, most ionic liquids are easy to recycle.

The ionic liquids used in the state of the art are advantageously formed from aromatic rings, in particular heteroaromatic rings, like imidazolium, pyridinium, pyrrolidinium, etc., which possess a $\pi$-complex with thiophene or pyridine rings. Alternative ionic liquids as disclosed in the state of the art are non-aromatic.

According to the present invention, ionic liquids are used as a catalyst in the hydroprocessing reaction. In particular, the catalyst used in the method of the invention comprises a fluoride-free ionic liquid. With fluoride-free is meant according to this invention that the content of fluoride ions is smaller than 500 ppm, preferably smaller than 100 ppm, most preferably smaller than 10 ppm.

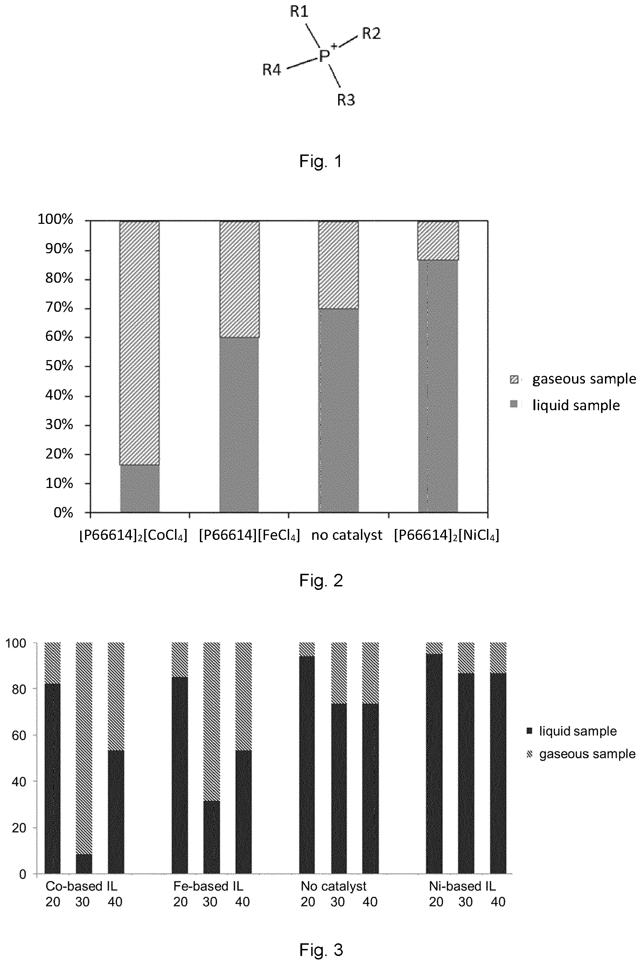

The fluoride-free ionic liquid is advantageously a phosphonium based ionic liquid. Preferably, the fluoride-free ionic liquid is a phosphonium based ionic liquid, wherein the phosphonium cation is a cation of the type or formula $[P_{R1,R2,R3,R4}]^+$ (see Fig. 1), wherein R1, R2, R3 and R4 are independently a hydrocarbon group. With independently it is meant that R1, R2, R3 and R4 may be the same or may be different hydrocarbon groups. Any one or all of the hydrocarbon groups R1, R2, R3 and R4 may comprise a main hydrocarbon chain having between 1 and 24 carbon atoms, such as between 1 and 20 carbon atoms, and preferably between 1 and 16 carbon atoms, such as between 1 and 12, between 1 and 8 carbon atoms or between 1 and 6 carbon atoms. In a preferred embodiment, any one or all of the hydrocarbon groups R1, R2, R3 and R4 may comprise between 1 and 24 carbon atoms, such as between 1 and 20 carbon atoms, and preferably between 1 and 16 carbon atoms, such as between 1 and 12, between 1 and 8 carbon atoms or between 1 and 6 carbon atoms. Each of R1, R2, R3 and R4 may independently of each other be linear or branched. Each of R1, R2, R3 and R4 may independently of each other be saturated (alkyl type) or unsaturated (alkene and/or alkyne type). When the hydrocarbon group is unsaturated, the hydrocarbon group may comprise one or more double and/or one or more triple carbon-carbon bonds. Advantageously, at least one of the hydrocarbon groups R1, R2, R3 and R4 is saturated (alkyl type). Preferably, at least two of the hydrocarbon groups R1, R2, R3, and R4 are saturated (alkyl type). More preferably, all hydrocarbon groups R1, R2, R3 and R4 are saturated (alkyl type), i.e. the ionic liquid comprises a tetraalkylphosphonium cation.

The fluoride-free ionic liquid of this invention advantageously comprises a metal chloride anion. The metal is advantageously selected from the group of transition metals. Preferably, the metal is Ni, Co or Fe.

According to a preferred embodiment, the fluoride-free ionic liquid is a phosphonium based ionic liquid comprising an alkylphosphonium cation and a metal chloride anion.

Suitable examples of such ionic liquid catalysts comprise a tetraalkylphosphonium cation of formula $[P_{R1,R2,R3,R4}]^+$, wherein R1, R2, R3 and R4 are independently an alkyl group having between 1 and 16 carbon atoms, and a metal chloride anion, wherein the metal is advantageously selected from the group of transition metals, and preferably is Ni, Co or Fe. The fluoride-free phosphonium based ionic liquid is advantageously selected from the group consisting of trihexyltetradecylphosphonium iron tetrachloride ($[P_{66614}][FeCl_4]$), bis(trihexyltetradecylphosphonium) nickel tetrachloride ($[P_{66614}]_2[NiCl_4]$) and bis(trihexyltetradecylphosphonium) cobalt tetrachloride ($[P_{66614}]_2[CoCl_4]$).

Depending on the nature of the metal of the metal chloride anion, the ionic liquids are advantageously manufactured using appropriate liquids, e.g. solvents. Consequently, depending on the composition of the ionic liquid, the cations and ions are advantageously comprised in a different solvent. For example, when the anion is an iron chloride anion ($FeCl_4$), dichloromethane is advantageously used as solvent in the manufacturing of the ionic liquid. For example, when the anion is a nickel chloride anion ($NiCl_4$), acetonitrile is advantageously used as solvent in the manufacturing of the ionic liquid. For example, when the anion is a cobalt chloride anion ($CoCl_4$), acetonitrile is advantageously used as solvent in the manufacturing of the ionic liquid.

The hydroprocessing reaction is advantageously performed at a pressure between 10 bar and 750 bar, such as between 15 bar and 500 bar, between 20 bar and 200 bar, preferably between 30 bar and 100 bar, or between 40 bar and 90 bar, and more preferably between 50 bar and 85 bar.

When the organic compound is a heavy hydrocarbon or an extra heavy hydrocarbon, or a heavy crude oil or an extra heavy crude oil, the hydroprocessing reaction is advantageously performed at a pressure between 20 bar and 750 bar, such as between 25 bar and 600 bar, and preferably at a pressure between 35 bar and 500 bar.

The hydroprocessing reaction is advantageously performed at a temperature between 250 °C and 500 °C, such as between 275 °C and 450 °C, or between 300 °C and 400 °C. Preferably, the reaction is performed at a temperature between 320 °C and 380 °C, such as between 330 °C and 380 °C, and more preferably between 345 °C and 375 °C.

When the organic compound is a heavy hydrocarbon, an extra heavy hydrocarbon, or a mixture thereof, or a heavy crude oil or an extra heavy crude oil, the hydroprocessing reaction is advantageously performed at a temperature between 320 °C and 380 °C.

When the organic compound is a heavy hydrocarbon, an extra heavy hydrocarbon, or a mixture thereof, or a heavy crude oil or an extra heavy crude oil, the hydroprocessing reaction is advantageously performed at a temperature between 320 °C and 380 °C and at a pressure between 35 bar and 500 bar.

The hydroprocessing reaction is advantageously carried out with a mass ratio of the ionic liquid to the organic compound between 0.005 g per kg and 250 g per kg, such as between 0.01 g per kg and 100 g per kg, or between 0.1 g per kg and 50 g per kg, between 0.5 g per kg and 20 g per kg, between 0.75 g per kg and 15 g per kg, between 0.9 g per kg and 10 g per kg, between 1 g per kg and 5 g per kg. Preferably, the hydroprocessing reaction is carried out with a mass ratio of the ionic liquid to the organic compound between 0.1 g per kg and 15 g per kg, more preferably between 1 g per kg and 5 g per kg.

When the organic compound comprises a hydrocarbon or a mixture of hydrocarbons, hydrogen and the hydrocarbon or the mixture of hydrocarbons are supplied to the hydroprocessing reaction in proportions ($H_2/C_nH_{2n+x}$ wherein x ranges from -36 to +2) of advantageously at least 3.5 to 100 parts by weight hydrogen to hydrocarbon (mixture), e.g. at least 3.6 to 90 parts by weight hydrogen to hydrocarbon (mixture), such as at least 3.8 to 75 parts by weight hydrogen to hydrocarbon (mixture), at least 4.0 to 70 parts by weight hydrogen to hydrocarbon (mixture), or at least 4.2 to 50 parts by weight hydrogen to hydrocarbon (mixture).

The hydroprocessing reaction can be performed via a batch process, wherein the organic compound to be hydroprocessed, hydrogen and the catalyst comprising the fluoride-free ionic liquid are introduced into the hydroprocessing reactor. The total required amount of catalyst can be added prior to or at the beginning of the hydroprocessing reaction. Alternatively, the catalyst can be continuously supplied to the organic compound to be processed throughout the duration of the hydroprocessing reaction, wherein the flow of catalyst added can be decreasing over time, increasing over time, or can be constant over time. The required amount of hydrogen can be supplied entirely prior to the start of the hydroprocessing reaction. Alternatively, hydrogen can be continuously supplied throughout the duration of the hydroprocessing reaction, wherein the flow of hydrogen added can be decreasing over time, increasing over time, or can be constant over time. When the hydroprocessing reaction is finished, the one or more reaction products, i.e. the one or more hydroprocessed organic compounds, are advantageously recovered from the hydroprocessing reactor and the catalyst is recovered for re-use.

Alternatively to a batch process, the hydroprocessing reaction can be performed in a continuous way, wherein the organic compound to be hydroprocessed, hydrogen and the catalyst comprising the fluoride-free ionic liquid are continuously supplied to the hydroprocessing reactor, and wherein the one or more reaction products, i.e. the one or more hydroprocessed organic compounds, are continuously removed from the hydroprocessing reactor, wherein the catalyst is continuously recovered and re-introduced in the hydroprocessing reactor.

The catalyst is advantageously comprised within the one or more reaction products, and is advantageously separated from therefrom for re-use. When the process is performed batch-wise, the recovered catalyst can be re-used in a next batch. When the process is performed in a continuous way, the catalyst recovered from the reaction products is advantageously re-introduced in the hydroprocessing reactor. The catalyst can be separated from the one or more reaction products by means of filtration or by means of any other suitable separation technique known in the art. Advantageously, at least 80% of the catalyst (weight based) is recovered and reused in a next batch process, preferably at least 85%, such as at least 90%, at least 95%, at least 97%, and most preferably at least 98%.

The hydroprocessing reaction is advantageously selected from the group consisting of hydrocracking, hydrodesulphurization, hydrodenitrogenation, hydrodemetallization, and hydrogenation.

When the organic compound is a heavy crude oil or an extra heavy crude oil, the hydroprocessing reaction may be performed in an oil well.

Alternatively, when the organic compound is a heavy crude oil or an extra heavy crude oil, the hydroprocessing reaction may comprise the following steps:

- partially extracting the organic compound from the oil well;
- hydroprocessing of the extracted organic compound to obtain a hydroprocessed oil;

- optionally injection of the hydroprocessed oil back into the oil well.

Injection of the hydroprocessed oil back into the oil well allows for mixture with organic compound that is not extracted from the oil well, which advantageously reduces the viscosity of the oil, and advantageously allows for easier transportation and processing, and a reduced risk for fouling and clogging of pipelines.

With the methods according to the present invention, and as described above, the chemical, the physical, and/or the rheological properties of the organic compound that is subjected to the hydroprocessing reaction in the presence of hydrogen and a catalyst comprising a fluoride-free ionic liquid, are advantageously modified.

The organic compound, when subjected to the hydroprocessing reaction of the present invention, is converted into one or more reaction products, i.e. one or more hydroprocessed organic compounds. The hydroprocessed compound advantageously comprises a liquid phase and/or a gaseous phase, and can further comprise a solid phase. Preferably, the hydroprocessed organic compound comprises at least a liquid phase and a gaseous phase. The liquid phase advantageously comprises one or more (liquid) components, comprising the catalyst and the desired reaction products. The gaseous phase advantageously comprises one or more (gaseous) components.

One of the chemical properties of the organic compound that is advantageously modified upon the hydroprocessing reaction is the molecular composition of the organic compound, advantageously resulting in a reduction of the average molecular weight and/or the average chain length of the hydroprocessed organic compound when compared to the organic compound prior to hydroprocessing.

The average chain length may be calculated based on the chain length and fraction of every component present in the organic compound and in the hydroprocessed organic compound. The ratio of the average chain length of the hydroprocessed organic compound to the average chain length of the organic compound advantageously is lower than 1, preferably lower than or equal to 0.9, such as lower than or equal to 0.8, 0.75, 0.7, 0.6, or 0.5. Alternatively, the number average molecular weight (Mn) can be used to express a reduction in the average chain length and average molecular weight. The number average molecular weight takes into account the number of molecules of every component and its molecular weight, which is related to the chain length, especially in case of linear molecules.

In the context of the present invention, the average molecular weight refers preferably to the weight average molecular weight (Mw). The weight average molecular weight (Mw) may be calculated according to formula I

$$Mw = \frac{\sum_{i=1}^{\infty} n_i Mw_i^2}{\sum_{i=1}^{\infty} n_i Mw_i} \qquad (I),$$

wherein

$Mw_i$ is the molecular weight of component i,
$n_i$ is the number of molecules having molecular weight $Mw_i$, and
i indicates the number of different components in the organic compound or in the hydroprocessed organic compound.

The ratio of the weight average molecular weight of the hydroprocessed organic compound to the weight average molecular weight of the organic compound advantageously is lower than 1, preferably lower than or equal to 0.9, such as lower than or equal to 0.8, 0.75, 0.7, 0.6, or 0.5.

Preferably, the hydroprocessed organic compound comprises a fraction (percentage) of alkanes that is equal to or higher than the fraction of alkanes comprised in the organic compound prior to hydroprocessing. Preferably, the average chain length of the alkanes in the hydroprocessed organic compound is lower than the average chain length of the alkanes in the organic compound, if any are present prior to hydroprocessing. Preferably, the weight average molecular weight of the alkanes in the hydroprocessed organic compound is lower than the weight average molecular weight of the alkanes in the organic compound, if any are present prior to hydroprocessing.

One of the rheological properties of the organic compound that may be modified upon the hydroprocessing reaction is the viscosity of the organic component. Preferably, the viscosity of the hydroprocessed organic compound is lower than the viscosity of the organic compound prior to hydroprocessing. The ratio of the viscosity of the hydroprocessed organic compound to the viscosity of the organic compound is lower than or equal to 0.9, such as lower than or equal to 0.8, 0.75, 0.7, 0.6 or 0.5. A reduction in viscosity may lead to a more liquid-like behaviour of the hydroprocessed organic compound compared to the behaviour of the organic compound, which typically behaves more like a solid. A reduction in viscosity will facilitate extraction of the processed organic compound from an oil well.

The method of the present invention allows to convert an organic compound in one or more reaction products, i.e. one or more hydroprocessed organic compounds, wherein the one or more hydroprocessed organic compound advantageously have, when compared to the organic compound to be hydroprocessed:

- a lower average chain length, and/or
- a lower weight average molecular weight, and/or
- a higher fraction of alkanes, in particular alkanes having shorter chains and/or having a lower molecular weight than the alkanes in the organic compound (if any), and/or
- a lower viscosity.

Compared to the methods in the state of the art, the method of the present invention allows to obtain the foregoing changes in the organic compound, wherein the total conversion of organic compound into hydroprocessed organic compounds is increased, for example by at least 1% (absolute value), such as at least 1.5%, 2%, 2.5%, or more.

Examples

The following examples demonstrate, without limitation, the method for hydroprocessing of an organic compound according to the invention.

Example 1: Hydroprocessing of n-dodecane (n-$C_{12}H_{25}$)

n-dodecane (n-$C_{12}$) was hydroprocessed at three different molar ratios of $H_2$/$n$-$C_{12}$, being 20, 30 and 40. Three different phosphonium-based fluoride-free ionic liquids were used as catalyst, and 3000 ppm of each catalyst was added respectively: a iron chloride based ionic liquid i.e. trihexyltetradecylphosphonium iron tetrachloride ($[P_{66614}][FeCl_4]$), a nickel based ionic liquid i.e. bis(trihexyltetradecylphosphonium) nickel tetrachloride ($[P_{66614}]_2[NiCl_4]$), and a cobalt based ionic liquid i.e. bis(trihexyltetradecylphosphonium) cobalt tetrachloride ($[P_{e66614}]_2[CoCl_4]$). The same reaction was also carried out without the use of a catalyst (ionic liquid catalyst or any other suitable type) as benchmark. The hydroprocessing reaction time was 1 hour for all reactions. For the 30 $H_2$/$n$-$C_{12}$ molar ratio, a reaction time of 15 minutes was tested as well. The hydroprocessing temperature was 350 °C, which was kept constant during entire the reaction time.

All tests were carried out in a 200 ml batch reactor that withstands temperatures up to 650 °C and pressures of 40 MPa. The experimental procedure included a temperature ramp from ambient pressure to the maintenance temperature and pressure, at a rate of 50 °C per every 10 min, until the hydroprocessing temperature of 350 °C was obtained. The gauge pressure was monitored at every 1 min interval for the reaction duration of 15 min, and it was monitored every 5 min for a reaction duration of 60 min. Between hydroprocessing reactions, the reactor was cleaned with hexane. Further, the reactor and the catalyst were independently flushed with $N_2$ to ensure an oxygen-depleted atmosphere.

It is believed that the conversion of n-dodecane results from two principal reactions: hydroisomerization and hydrocracking. At lower conversion efficiencies, hydroisomerization predominated whereas at higher conversion efficiencies, hydrocracking predominated. Both the isomerization, and cracking followed by hydrogenation of n-dodecane to smaller alkanes and cycloalkanes, took place.

After the reaction, the gas phase and the liquid phase were collected at room temperature. The catalytic activity was assessed on the basis of converting a higher liquid content (or middle distillates) to gaseous components in the reactor.

Fig. 2 shows the percentage of gaseous phase (labelled gaseous sample') and liquid phase (labelled 'liquid sample'), on volume base, of the reaction products obtained with the hydroprocessing reaction performed for 15 minutes at 350 °C and for a molar ratio for $H_2$/$n$-$C_{12}$ of 30, using no catalyst and the three ionic liquid catalysts as described above. The objective is to obtain a large fraction of gaseous phase and a small fraction of liquid phase. It is noticed that the amount of liquid phaseis lower for the ionic liquid catalysts comprising iron ($[P_{66614}][FeCl_4]$) and cobalt ($[P_{66614}]_2[CoCl_4]$) than for the reaction without any catalyst and with the ionic liquid catalyst comprising nickel ($[P_{66614}]_2[NiCl_4]$). With the iron comprising ionic liquid catalyst a hydroprocessing efficiency (being the fraction of gaseous phase in the reaction product) is about 60%. This is an improvement of about 30% with respect to the reaction product obtained without any catalyst being used. The cobalt-based ionic liquid resulted in a hydroprocessing efficiency of about 82%. This is an improvement of about 52% with respect to the reaction product obtained without any catalyst being used.

Referring to Fig. 3, the hydroprocessing efficiency results for n-dodecane are presented for the reaction products obtained by using the three above-mentioned ionic liquid catalysts and for the reaction product obtained without using any catalyst, for a hydroprocessing duration of 1 hour at 350 °C. Three experiments were performed for each catalyst and for the reaction without any catalyst, using a different molar ratio for $H_2$/$n$-$C_{12}$ of 20, 30 and 40, shown in the graph from left to right. It is clear that the fraction of liquid in the resulting product is lower for all three molar ratios for the ionic liquid catalysts comprising iron (Fe-based IL) and cobalt (Co-based IL), when compared to the reaction without any catalyst. For the Co-based ionic liquid a hydroprocessing efficiency of about 90% is obtained at a molar ratio for $H_2$/$n$-$C_{12}$ of 30, which is an improvement of about 60% with respect to the reaction product obtained without catalyst being used.

The gaseous phases collected were analyzed using gas chromatography - mass spectrometry (GC-MS). The main components found for all gaseous phases were alkanes and alkenes. Table 1 shows the quantitative analysis of the gaseous phase of the reaction products for the hydroprocessing reactions that were carried out at a molar ratio for $H_2/n$-$C_{12}$ of 30 and for a duration of 15 minutes, for all three ionic liquid catalysts and the reaction without a catalyst. The fraction of each component is shown in percent (%) based on the total weight (weight fraction in %, or weight percentage). Table 2 shows the quantitative analysis of the gaseous phase of the reaction products for the hydroprocessing reactions that were carried out at a molar ratio for $H_2/n$-$C_{12}$ of 30 and 40, and for a duration of 1 hour, for all three ionic liquid catalysts (abbreviated as IL) and the reaction without a catalyst. The fraction of each component is shown in percent (%) based on the total weight (weight fraction in %, or weight percentage).

It is clear from Table 1 and Table 2 that both alkanes and alkenes are detected in the gaseous phase of the hydroprocessing reaction products, for all reactions, with and without the use of catalyst.

No n-dodecane was present in the gaseous phase of the reaction products of the hydroprocessing reactions at a molar ratio for $H_2/n$-$C_{12}$ of 40 and a duration of 1h, for the reactions performed with an ionic liquid catalyst. For the same reaction without a catalyst, still 0.90% n-dodecane (weight fraction) was detected in the gaseous phase. The absence of n-dodecane in the gaseous phase of the reaction products indicates that with the use of any one of the three ionic liquid catalysts tested, it is possible to obtain a full conversion of the n-dodecane into lower hydrocarbon products (lower chain length and/or molecular weight). For the 1 hour hydroprocessing reaction at a molar ratio for $H_2/n$-$C_{12}$ of 40 and at a temperature of 350°C, the lower hydrocarbon products have a chain length of 9, 8 or 7 carbon atoms or less when using respectively the cobalt-based, the nickel-based or the iron-based ionic liquid catalyst.

The gaseous phase of the reaction product of the hydroprocessing without catalyst comprised, for a hydroprocessing reaction time of 15 minutes, the presence of toluene, which is toxic. Other components detected in the gaseous phase of the no-catalyst reaction product (for 15 minutes and 1 hour reaction time) were ethylbenzene (0.61%), p-xylene (0.41%), styrene (0.46%), xylene (0.41%), alpha-pinene (0.34%), trimethylbenzene (0.47%), 3-carene (0.34%) and D-limonene (0.36%). All percentages are weight fractions. None of these unwanted components were detected in the reaction products of the hydroprocessing reactions in the presence of the three tested fluoride-free ionic liquid catalysts.

Table 1: quantitative analysis (weight percentage) of the gaseous phase of reaction products; hydroprocessing reaction at molar ratio for $H_2/n$-$C_{12}$ of 30, duration 15 min

| Gases | Co-based IL | Fe-based IL | No catalyst | Ni-based IL |
|---|---|---|---|---|
| **Ethene** | - | | | |
| **Ethane** | - | 0.54 | 2.99 | 5.18 |
| **Propene** | 6.47 | 10.62 | 11.65 | 12.49 |
| **Propane** | 6.42 | 9.62 | 12.74 | 11.73 |
| **Butene** | 5.46 | 10.45 | 11.81 | 13.2 |
| **Butane** | 5.59 | 10.53 | 13.24 | 11.24 |
| **Pentene** | 6.23 | 11.51 | 11.52 | 21.12 |
| **Pentane** | 5.32 | 10.12 | 10.06 | 0.63 |
| **1-Hexene** | 33.16 | 10.97 | 7.91 | 13.41 |
| **Hexane** | 22.40 | 7.52 | 5.19 | 6.57 |
| **Heptene** | 1.82 | 2.67 | 2.47 | 2.33 |
| **Heptane** | 1.40 | 2.14 | 1.58 | 1.05 |
| **Toluene** | - | - | 0.38 | - |
| **Octene** | 0.42 | 0.59 | 0.46 | 0.39 |
| **Octane** | 0.31 | 0.54 | 0.43 | 0.16 |
| **Nonene** | - | - | - | 0.04 |
| **Dodecane** | 1.94 | 7.15 | 1.00 | - |

Table 2: quantitative analysis (weight percentage) of the gaseous phase of reaction products; hydroprocessing reaction at molar ratio for $H_2$/n-$C_{12}$ of 30 and 40, duration 1 hour

| Gases | Co-based - 30 | Fe-based - 30 | No catalyst - 30 | Ni-based - 30 | Co-based - 40 | Fe-based - 40 | No catalyst - 40 | Ni-based - 40 |
|---|---|---|---|---|---|---|---|---|
| Ethene | 5.16 | 0.15 | 1.83 | 3.09 | 1.58 | 4.90 | 0.39 | - |
| Ethane | | 6.56 | 0.59 | 0.51 | - | 1.31 | | - |
| Propene | 0.17 | 13.24 | 17.30 | 10.84 | 6.09 | 10. 8 | 8.43 | 8.57 |
| Propane | 4.93 | 11.95 | 17.09 | 9.97 | 6.41 | 10.1 | 9.63 | 9.46 |
| Butene | 4.97 | 14.19 | 10.84 | 7.18 | 4.67 | 8.20 | 9.86 | 6.43 |
| Cyclobutene | | 0.16 | - | - | - | - | - | - |
| Butane | 5.10 | 12.21 | 10.76 | 7.51 | 5.00 | 8.69 | 12.21 | 8.45 |
| Pentene | 5.50 | 12.85 | 6.68 | 5.68 | 3.57 | 8.7 | 11.94 | 10.1 |
| Pentane | 7.25 | 9.59 | 5.71 | 5.03 | 3.75 | 7.47 | 13.22 | 11.7 |
| Hexene | 30.11 | 7.87 | 16.75 | 22.58 | 44.96 | 24.42 | 10.23 | 20.81 |
| Hexane | 21.26 | 6.38 | 11.44 | 23.75 | 21.8 | 14.0 | 9.43 | 15.9 |
| Heptene | 1.54 | 2.37 | 0.35 | | 0.46 | 0.81 | 4.63 | 4.72 |
| Heptane | 4.55 | 1.28 | 0.24 | 0.11 | 0.55 | 0.50 | 3.96 | 3.26 |
| 1-Octene | 3.67 | 0.57 | - | - | 0.43 | - | 1.23 | 0.50 |
| Octane | 1.36 | 0.28 | - | - | 0.38 | - | 0.87 | 0.18 |
| Nonene | 1.13 | 0.06 | - | - | 0.16 | - | 0.14 | - |
| Nonane | 0.18 | 0.04 | - | - | 0.08 | - | 0.09 | - |
| Decene | - | | - | - | - | - | 0.06 | - |
| Dodecane | 0.32 | 0.26 | 0.44 | 3.75 | - | - | 0.90 | - |

The liquid phases collected were analysed by gas chromatography -flame ionization detector (GC-FID). GC-FID was useful to see the aliphatic compounds up to chain lengths of 38 carbon atoms (noted as $C_{38}$ in the liquid phase of the organic compound prior to and after hydroprocessing. GC-FID was not effective in detecting aromatic components. The limit of detection of this GC-FID analysis was 0.0005%.

Table 3 shows the weight fraction in percent (weight percentage) components in the liquid phase for the hydroprocessing reaction with the three ionic liquid catalysts and without catalyst, for a reaction time of 15 minutes and 1 hour, and for a molar ratio for $H_2$/n-$C_{12}$ of 30. Table 4 shows the weight fraction in percent (weight percentage) components in the liquid phase for the hydroprocessing reaction with the three ionic liquid catalysts and without, for a reaction time of 1 hour for a molar ratio for $H_2$/n-$C_{12}$ of 20 and 40. In all reaction products, high quantities of $C_{12}$ and isomers of $C_{12}$ are detected, and analysis showed that 99% of hydroisomerization of dodecane occurred, i.e. instead of n-dodecane, which is a linear molecule having a carbon chain of 12 molecules, branched molecules with in total 12 carbon atoms were obtained, which indicates the hydroprocessing of n-dodecane.

Table 3: weight percentage of components in the liquid phase of reaction products; hydroprocessing reaction at molar ratio for $H_2$/n-$C_{12}$ of 30, duration 15 min and 1 hour

| | 15 min hydroprocessing reaction time | | | | 1 h hydroprocessing reaction time | | | |
|---|---|---|---|---|---|---|---|---|
| | No catalyst | Fe-based | Co-based | Ni-based | No catalyst | Fe-based | Co-based | Ni-based |
| n-C5 | 0.02 | 0.02 | 0.19 | 0.01 | 0.02 | 0.19 | 0.19 | 0.01 |
| n-C6 | 1.21 | 1.21 | 0.38 | 0.03 | 1.29 | 0.38 | 0.38 | 0.22 |
| n-C7 | 0.05 | 0.05 | 0.29 | 0.01 | 0.03 | 0.29 | 0.29 | 0.02 |

(continued)

| | 15 min hydroprocessing reaction time | | | | 1 h hydroprocessing reaction time | | | |
|---|---|---|---|---|---|---|---|---|
| | No catalyst | Fe-based | Co-based | Ni-based | No catalyst | Fe-based | Co-based | Ni-based |
| n-C8 | 0.07 | 0.07 | 0.30 | 0.02 | 0.00 | 0.30 | 0.30 | 0.02 |
| n-C9 | 0.07 | 0.07 | 0.33 | 0.02 | 0.07 | 0.33 | 0.33 | 0.02 |
| n-C10 | 0.12 | 0.12 | 0.19 | 0.10 | 0.11 | 0.19 | 0.19 | 0.10 |
| n-C11 | 0.11 | 0.11 | 0.10 | 0.10 | 0.11 | 0.10 | 0.10 | 0.10 |
| C12 + C12 isomers | 97.85 | 97.85 | 95.38 | 96.38 | 97.90 | 95.60 | 95.40 | 99.30 |
| C6 alkenes or cyclohexane | 0.03 | 0.03 | 0.36 | 0.03 | 0.28 | 0.36 | 0.47 | 0.02 |
| C7 alkenes or cycloheptane | 0.03 | 0.03 | 0.47 | 0.01 | 0.02 | 0.47 | 0.53 | 0.01 |
| C8 alkenes or cyclooctane | 0.04 | 0.04 | 0.53 | 0.02 | 0.05 | 0.53 | 0.50 | 0.02 |
| C9 alkenes or cyclononane | 0.04 | 0.04 | 0.50 | 0.02 | 0.04 | 0.50 | 0.53 | 0.02 |
| C10 alkenes or cyclodecane | 0.05 | 0.05 | 0.53 | 0.02 | 0.08 | 0.53 | 0.18 | 0.03 |
| C11 alkenes or cycloundecane | 0.01 | 0.01 | 0.18 | 0.01 | 0.06 | 0.18 | 0.36 | 0.02 |

Table 4: weight percentage of components in the liquid phase of reaction products; hydroprocessing reaction at molar ratio for $H_2$/n-$C_{12}$ of 20 and 40, duration 1 hour

| | Molar ratio for $H_2$/n-$C_{12}$ = 20 | | | | Molar ratio for $H_2$/n-$C_{12}$ = 40 | | | |
|---|---|---|---|---|---|---|---|---|
| | No catalyst | Fe-based | Co-based | Ni-based | No catalyst | Fe-based | Co-based | Ni-based |
| n-C5 | 0.02 | <0.0005 | 0.03 | 0.02 | 0.15 | 0.01 | 0.02 | 0.02 |
| n-C6 | 0.23 | <0.0005 | 0.08 | 0.24 | 0.39 | 0.03 | 1.21 | 0.32 |
| n-C7 | 0.03 | <0.0005 | 0.03 | 0.02 | 0.29 | 0.01 | 0.05 | 0.03 |
| n-C8 | 0.04 | 0.01 | 0.03 | 0.03 | 0.34 | 0.02 | 0.07 | 0.04 |
| n-C9 | 0.04 | 0.02 | 0.03 | 0.03 | 0.31 | 0.02 | 0.07 | 0.04 |
| n-C10 | 0.10 | 0.02 | 0.11 | 0.10 | 0.19 | 0.10 | 0.12 | 0.10 |
| n-C11 | 0.10 | 0.10 | 0.10 | 0.10 | 0.10 | 0.10 | 0.11 | 0.10 |
| C12 and C12 isomers | 99.10 | 99.63 | 99.32 | 99.28 | 96.54 | 99.5 | 97.8 | 99.1 |
| C6 alkenes or cyclohexane | 0.160 | <0.0005 | 0.06 | 0.01 | 0.33 | 0.024 | 0.208 | 0.031 |
| C7 alkenes or cycloheptane | 0.033 | 0.01 | 0.02 | 0.01 | 0.49 | 0.012 | 0.042 | 0.028 |
| C8 alkenes or cyclooctane | 0.042 | 0.01 | 0.04 | 0.03 | 0.58 | 0.019 | 0.055 | 0.035 |
| C9 alkenes or cyclononane | 0.041 | 0.02 | 0.02 | 0.02 | 0.52 | 0.016 | 0.054 | 0.038 |

(continued)

| | Molar ratio for $H_2/n\text{-}C_{12}$ = 20 | | | | Molar ratio for $H_2/n\text{-}C_{12}$ = 40 | | | |
|---|---|---|---|---|---|---|---|---|
| | No catalyst | Fe-based | Co-based | Ni-based | No catalyst | Fe-based | Co-based | Ni-based |
| C10 alkenes or cyclodecane | 0.054 | 0.09 | 0.02 | 0.02 | 0.54 | 0.020 | 0.068 | 0.046 |
| C11 alkenes or cycloundecane | 0.018 | <0.0005 | <0.0005 | <0.0005 | 0.19 | 0.012 | 0.026 | 0.013 |

The viscosity of the reaction products obtained from the different hydroprocessing reactions of n-dodecane was measured using a microviscometer. The instrument used for the measurement of viscosity was $\mu$VISCTM Rheosense (CA, USA). About 110-250 microliter reaction product was used in a positive displacement pipette. The flow rate was approximately 450 $\mu$l/min. The measurements were performed at 25 °C. After each sampling the instrument was cleaned with isopropanol to avoid cross-contamination. The viscosity of all hydroprocessed n-dodecane reaction products was almost similar to that of the n-dodecane prior to hydroprocessing.

Example 2: Hydroprocessing of Azerbaijan - Georgia - Turkey (AGT) crude oil

The qualitative analysis of metals in the AGT crude oil prior to hydroprocessing was measured using energy dispersive X-ray fluorescence (EDXRF). EDXRF allowed to characterize the metal and non-metal components of the AGT crude oil as follows: C%=79%; H%=12.1%; S%=5.8%, N%=0.5%, Al, Si, P, K, Ca = <0.1%; Ti <0.01%; Cl=60.9 mg/kg; V=200 mg/kg; Fe=14.3%; Cr, Co and Mn <10 mg/kg; Ni=44.2 mg/kg; Cu, Zn, As, Se, Br, Rb, Sr, Y, Nb, Pd, Ag, Cd, Sn, Sb, Pb <5 mg/kg; Ba <20 mg/kg; Mo =5.9 mg/kg, and Zr <10 mg/kg.
AGT crude oil was hydroprocessed with and without ionic liquid catalyst. The reaction was performed at two different pressures of hydrogen, measured at room temperature, and being 30 bar(g) and 35 bar(g), which correspond to a similar reactor pressures as when n-dodecane was hydroprocessed at 350 °C and at a molar ratio for $H_2/n\text{-}C_{12}$ of resp. 20 and 30. Three different phosphonium-based fluoride-free ionic liquids were used as catalyst, and 12500 ppm of each catalyst was added: an iron chloride based ionic liquid ($[P_{66614}][FeCl_4]$), a nickel based ionic liquid ($[P_{66614}]_2[NiCl_4]$), and a cobalt based ionic liquid ($[P_{66614}]_2[CoCl_4]$). The same reaction was also carried out without the use of a catalyst (ionic liquid catalyst or any other suitable type) as benchmark. The hydroprocessing reaction time was 1 hour and the process temperature was 350 °C for all reactions.
The reaction product, i.e. the hydroprocessed AGT crude oil, comprised three fractions: a solid phase, a liquid phase and a gaseous phase. Table 5 shows the weight fraction in percent (weight percentage) of each phase (solid, liquid and gaseous) for the reaction product of the different hydroprocessing reactions: 30 bar(g) and 35 bar(g), and without catalyst vs. Co-based ionic liquid catalyst, Fe-based ionic liquid catalyst and Ni-based ionic liquid catalyst. The gaseous phase was collected at room temperature. The liquid phase comprises lighter fraction oils. The solid phase was a sticky solid. The total conversion rate is the sum of the gaseous (weight) fraction and the liquid (weight) fraction, because these are the phases that are preferably obtained, while a good conversion efficiency corresponds to a limited fraction of solid phase.
It is clear from Table 5 that for the reactions at 30 bar(g) and 35 bar(g) hydrogen pressure the total conversion rate is significantly higher for the hydroprocessing reactions performed in the presence of an ionic liquid catalyst (i.e. according to the invention) compared to the same reaction without any catalyst. A higher total conversion results in a higher quantity of liquid phase and gaseous phase, and thus a more favourable reaction as the production of lighter and/or shorter molecules is the objective of the hydroprocessing reaction. The differences between the reactions at 30 bar(g) and 35 bar(g) hydrogen pressure, for the reactions in the presence of an ionic liquid catalyst, are not significant.

Table 5: weight percentage of each phase in the reaction product from AGT crude oil

| $H_2$ pressure | Catalyst | Solid phase | Hardness solid phase | Liquid phase | Colour liquid phase | Gaseous phase | Total conversion |
|---|---|---|---|---|---|---|---|
| 30 bar(g) | Co-based | 37.14% | Soft | 21.64% | Non-transparent brownish-yellow | 41.23% | 62.86% |
| 30 bar(g) | Fe-based | 38.44% | Medium hard | 13.82% | Transparent light yellow | 47.74% | 61.56% |

(continued)

| H₂ pressure | Catalyst | Solid phase | Hardness solid phase | Liquid phase | Colour liquid phase | Gaseous phase | Total conversion |
|---|---|---|---|---|---|---|---|
| 30 bar(g) | Ni-based | 36.69% | Soft | 18.62% | Slightly transparent to yellow | 44.69% | 63.31% |
| 30 bar(g) | - | 60.0% | Very hard | 11.5% | Slightly transparent to yellow | 28.5% | 40.0% |
| 35 bar(g) | Co-based | 34.35% | Soft | 17.82% | Brownish-yellow non transparent | 47.83% | 65.65% |
| 35 bar(g) | Fe-based | 41.54% | Hard | 19.83% | Transparent yellow | 38.64% | 58.46% |
| 35 bar(g) | Ni-based | 36.78% | Soft | 15.69% | Brownish yellow | 47.53% | 63.22% |
| 35 bar(g) | - | 63.5% | Very hard | 12.0% | Blackish brown | 24.5% | 36.5% |

The gaseous phase of the reaction product was analysed by means of GC-MS. Table 6 presents the weight fraction in percent (weight percentage) of each gaseous molecule that was detected, for the reactions at 30 bar(g) and 35 bar(g) hydrogen pressure and with the three tested ionic liquid catalysts and without the use of a catalyst.

Table 6: weight percentage of each molecule in the gaseous phase of the reaction product from AGT crude oil

| H2 pressure (bar(g)) | 30 | 30 | 30 | 30 | 35 | 35 | 35 | 35 |
|---|---|---|---|---|---|---|---|---|
| Catalyst | Co | Fe | Ni | - | Co | Fe | Ni | - |
| Ethene | 0.14 | 0.34 | 0.20 | 0.29 | 0.19 | - | 0.28 | 0.33 |
| Ethane | 2.18 | 4.08 | 2.29 | 4.41 | 2.23 | - | 2.09 | 3.93 |
| Propene | 1.23 | 2.48 | 1.26 | 2.45 | 1.22 | 2.23 | 1.21 | 1.91 |
| Propane | 6.16 | 8.99 | 6.51 | 10.6 | 7.21 | 12.7 | 6.95 | 10.5 |
| Isobutane | 3.48 | 4.43 | 3.60 | 5.03 | 4.50 | 6.49 | 4.12 | 4.49 |
| Butene | 2.89 | 5.63 | 2.99 | 5.67 | 2.36 | 3.49 | 2.24 | 5.27 |
| Butane | 9.41 | 10.81 | 9.88 | 13.0 | 11.8 | 16.8 | 11.8 | 13.9 |
| Methylbutene | 1.73 | 2.83 | 1.73 | 21.6 | 1.20 | 1.4 | 1.19 | 2.59 |
| Methylbutane | 8.86 | 8.60 | 9.26 | 1.28 | 10.6 | 11.8 | 10.7 | 10.1 |
| 1-Pentene | 1.51 | 2.73 | 1.54 | 1.64 | 1.3 | 1.38 | 1.08 | 2.21 |
| Pentane | 9.79 | 9.43 | 10.31 | 0.77 | 11.6 | 12.4 | 12.4 | 12.3 |
| Dimethylbutane | 1.91 | 1.53 | 2.05 | 1.46 | 1.70 | 1.34 | 2.03 | 1.5 |
| Cyclopentene | 0.13 | 0.20 | 0.13 | 0.15 | 0.15 | 0.07 | 0.08 | 0.16 |
| Methylpentene | 2.79 | 0.97 | 3.17 | 1.3 | 2.24 | 1 | 2.27 | 1.57 |
| Cyclopentane | 0.88 | 0.80 | 0.82 | 0.63 | 0.87 | 0.55 | 0.93 | 0.73 |
| Methylpentane | 9.33 | 9 | 9.29 | 6.72 | 9.52 | 6.06 | 10.1 | 7.71 |
| Hexane | 8.01 | 6.31 | 8.18 | 4.74 | 8.14 | 4.82 | 9.06 | 5.79 |
| 1-Hexene | 0.58 | 0.53 | 0.6 | 0.29 | 0.44 | 0.16 | 0.46 | 0.31 |
| Methylcyclopentene | 0.33 | 0.46 | 0.31 | 0.14 | 0.22 | 0.12 | 0.19 | 0.21 |
| Dimethylpentane | 1.53 | 0.95 | 1.37 | 0.68 | 1.22 | 0.49 | 1.37 | 0.74 |
| Methylcyclopentane | 2.62 | 1.73 | 2.49 | 1.35 | 2.32 | 1.08 | 2.61 | 1.67 |

(continued)

| H2 pressure (bar(g)) | 30 | 30 | 30 | 30 | 35 | 35 | 35 | 35 |
|---|---|---|---|---|---|---|---|---|
| Dimethylpentene | 0.06 | 0.07 | 0.05 | 0.01 | 0.03 | 0.01 | 0.03 | - |
| Benzene | 0.94 | 0.47 | 0.85 | 0.42 | 0.76 | 0.29 | 0.80 | 0.48 |
| Methylhexene | 0.02 | 0.03 | 0.02 | 0.03 | 0.01 | - | 0.01 | 0.02 |
| Cyclohexane | 1.75 | 0.99 | 1.60 | 0.73 | 1.39 | 0.54 | 1.61 | 0.94 |
| Methylhexane | 3.83 | 2.2 | 3.42 | 2.22 | 2.93 | 1.1 | 3.5 | 1.9 |
| Dimethylcyclopentane | 1.87 | 1.11 | 1.79 | 0.72 | 1.37 | 0.43 | 1.52 | 0.94 |
| Heptene | 0.01 | 0.06 | 0.04 | 0.05 | 0.03 | - | 0.01 | 0.03 |
| Heptane | 2.70 | 1.51 | 2.30 | 1.03 | 1.85 | 0.68 | 2.36 | 1.28 |
| Dimethylcyclopentene | - | 0.14 | 0.09 | - | - | - | - | - |
| Methylhexene | - | 0.02 | 0.01 | - | - | - | - | - |
| Methylcyclohexane | 2.00 | 0.87 | 1.69 | 0.62 | 1.34 | 0.40 | 1.69 | 0.78 |
| Dimethylcyclohexane | 0.62 | 0.21 | 0.46 | 0.16 | 0.33 | 0.08 | 0.43 | 0.32 |
| Dimethylcyclohexane + Ethylcyclopentane | 0.45 | 0.20 | 0.38 | 0.14 | 0.29 | 0.08 | 0.37 | |
| Heptyne | 0.01 | 0.01 | 0.01 | - | 0.01 | - | 0.01 | - |
| Trimethylcyclopentane | 0.44 | 0.2 | 0.38 | 0.14 | 0.17 | 0.04 | 0.31 | 0.13 |
| Toluene | 0.59 | 0.16 | 0.46 | 0.16 | 0.32 | 0.08 | 0.34 | 0.16 |
| Methylheptane | 0.98 | 0.43 | 0.77 | 0.28 | 0.39 | 0.18 | 0.76 | 0.31 |
| Methylcyclohexene | - | - | - | 0.01 | 0.16 | - | - | - |
| Ethylhexane | 0.05 | 0.00 | 0.04 | 0.01 | 0.03 | - | 0.04 | - |
| Methyl-ethyl-cyclopentane | 0.09 | 0.03 | 0.07 | 0.03 | 0.05 | 0.01 | 0.07 | 0.03 |
| Octane | 0.46 | 0.16 | 0.33 | 0.12 | 0.23 | 0.06 | 0.31 | 0.12 |
| Dimethylheptane | 0.08 | 0.03 | 0.06 | 0.02 | 0.04 | - | 0.05 | - |
| Ethylcyclohexane | 0.10 | 0.03 | 0.07 | 0.02 | 0.05 | 0.01 | 0.06 | 0.02 |
| Trimethylcyclohexane | 0.09 | 0.02 | 0.06 | 0.02 | 0.04 | - | 0.05 | |
| Ethylbenzene | 0.10 | 0.01 | 0.05 | 0.02 | 0.03 | - | 0.03 | 0.01 |
| m+p-xylene | 0.21 | 0.03 | 0.10 | 0.04 | 0.07 | 0.01 | 0.07 | 0.03 |
| o-xylene | 0.04 | 0.00 | 0.02 | 0.01 | 0.01 | - | 0.01 | 0.01 |
| Nonane | 0.05 | 0.01 | 0.02 | 0.01 | 0.01 | - | 0.02 | 0.01 |
| Decane | 0 | - | - | - | - | - | - | 0.00 |
| Dodecane | - | | - | - | - | - | - | 0.01 |
| Hydrogen sulfide | 6.32 | 8.00 | 6.54 | 8.58 | 5.90 | 11.4 | 2.05 | 3.81 |
| Methylene chloride | - | - | - | - | 0.75 | - | - | 0.11 |
| Other | 0.72 | 0.18 | 0.40 | 0.93 | 0.54 | 0.26 | 0.33 | 0.69 |

The liquid phase and the solid phase of the reaction products was analysed by means of two dimensional gas chromatography (2D-GC). Table 7 presents the weight fraction of every type of component that was detected for the reactions at 30 bar(g) hydrogen pressure and with the three tested ionic liquid catalysts and without the use of a catalyst, as well as for the AGT oil prior to hydroprocessing ("no hydroprocessing"). The weight fraction of the liquid components is expressed as the weight of the liquid component (in mg) per kg liquid phase. The weight fraction of the solid components is expressed as the weight of every solid component (in mg) per kg solid phase.

Regarding the liquid phase, it is clear from Table 7 that the weight fraction of shorter chain alkanes (especially up to $C_{20}$-$C_{22}$), expressed in mg (liquid) component per kg liquid phase, is significantly higher in the reaction products than in the AGT crude oil, for both the reactions with and without catalyst. From Table 5 it is noted that the weight fraction of liquid phase in the total reaction product is higher for the reactions performed in the presence of an ionic liquid catalyst (weight based). Hence, the liquid phase obtained upon hydroprocessing in the presence of an ionic liquid catalyst is an amount that is acceptable (efficient conversion), and comprises a larger weight fraction of shorter chain molecules. More liquid phase, and especially a larger fraction of lower chain or lower molecular weight molecules in the liquid phase, results in a reduction of the viscosity, and in a composition that is easier to handle, process and transport in the pipelines.

Regarding the solid phase, it is clear from Table 7 that the weight fraction of alkanes having more than 30 carbon atoms (EC>30), expressed in mg (solid) component per kg solid phase, is higher in the solid phase of the reaction product of the reaction without catalyst compared to the AGT crude oil prior to hydroprocessing. However, for the solid phase obtained with any one of the three ionic liquid catalysts, and in particular the cobalt-based ionic liquid catalyst (column Co), the weight fraction of shorter chain components in the solid phase has increased and the weight fraction of alkanes having more than 30 carbon atoms has decreased compared to the solid phase of the reaction product from the hydroprocessing without catalyst. This indicates that, together with a lower fraction of solid phase (Table 5), the solid phase of the reactions performed with an ionic liquid catalyst comprise more shorter and ligher molecules, reducing the viscosity and hardness of the solid phase and making the solid phase thus easier to handle.

Similar conclusions are valid for the cycloalkanes detected in the liquid and solid phase of the reaction products.

Table 7: weight fraction of components detected in the liquid and solid phase of reaction product from AGT crude oil

| Class | No hydro-processing | Liquid phase | | | | Solid phase | | | |
|---|---|---|---|---|---|---|---|---|---|
| | | Co | Fe | Ni | - | Co | Fe | Ni | - |
| Alkanes | mg/kg | mg/kg | mg/kg | mg/kg | mg/kg | mg/kg | mg/kg | mg/kg | mg/kg |
| EC8-10 | 20030 | 65851 | 26952 | 37837 | 51622 | 6702 | 91 | 125 | 438 |
| EC10-12 | 12410 | 66096 | 40710 | 33575 | 52432 | 5956 | 423 | 1068 | 782 |
| EC12-14 | 11464 | 63855 | 37879 | 47458 | 56118 | 6171 | 524 | 655 | 1145 |
| EC14-16 | 12138 | 50937 | 33346 | 29700 | 50177 | 5636 | 575 | 686 | 1201 |
| EC16-18 | 7960 | 36965 | 29443 | 22981 | 32281 | 4483 | 458 | 532 | 1104 |
| EC18-20 | 5519 | 24924 | 19901 | 14634 | 19006 | 2831 | 424 | 380 | 1030 |
| EC20-22 | 4767 | 17654 | 15672 | 10769 | 11751 | 2215 | 443 | 374 | 1165 |
| EC22-24 | 4346 | 13450 | 12258 | 8565 | 7572 | 1699 | 523 | 417 | 1387 |
| EC24-26 | 4373 | 10972 | 9517 | 7359 | 4048 | 1355 | 782 | 548 | 1848 |
| EC26-28 | 3060 | 7587 | 5751 | 5781 | 1864 | 1036 | 907 | 726 | 1831 |
| EC28-30 | 2541 | 4781 | 3864 | 4581 | 940 | 747 | 1054 | 922 | 1934 |
| EC>30 | 13886 | 10497 | 7439 | 11896 | 751 | 3102 | 9656 | 9674 | 15011 |
| Cyclo Alkanes | | | | | | | | | |
| EC8-10 | 1823 | 6033 | 7771 | 11093 | 11078 | 278 | 95 | 34 | 131 |
| EC10-12 | 8496 | 40648 | 28591 | 104662 | 37122 | 2245 | 196 | 284 | 669 |
| EC12-14 | 10476 | 51227 | 44944 | 44854 | 47268 | 2214 | 381 | 513 | 1229 |
| EC14-16 | 6227 | 32358 | 37825 | 35001 | 30077 | 1165 | 253 | 226 | 944 |
| EC16-18 | 9524 | 39147 | 36148 | 31355 | 37562 | 1918 | 376 | 428 | 1411 |
| EC18-20 | 8452 | 27796 | 27671 | 22773 | 25665 | 1602 | 485 | 519 | 1877 |
| EC20-22 | 7344 | 21560 | 21584 | 17174 | 17259 | 1382 | 507 | 450 | 2350 |
| EC22-24 | 6448 | 14280 | 13428 | 12273 | 7889 | 882 | 730 | 704 | 2426 |
| EC24-26 | 5202 | 9938 | 9534 | 9780 | 3775 | 622 | 1130 | 895 | 2848 |
| EC26-28 | 5410 | 8675 | 7818 | 9526 | 2246 | 687 | 2096 | 1790 | 3574 |

(continued)

| Cyclo Alkanes | | | | | | | | | |
|---|---|---|---|---|---|---|---|---|---|
| EC28-30 | 5423 | 7204 | 5591 | 7636 | 982 | 840 | 2683 | 2586 | 4146 |
| EC>30 | 11251 | 5434 | 3846 | 9055 | 40 | 1452 | 9006 | 9545 | 13183 |
| **Alkenes** | | | | | | | | | |
| EC8-10 | 279 | 4651 | 4930 | 3521 | 8274 | 61 | 139 | 82 | 222 |
| EC10-12 | 64 | 4794 | 7538 | 4212 | 10754 | 53 | 57 | 39 | 160 |
| EC12-14 | 0 | 6757 | 10286 | 5766 | 10849 | 87 | 91 | 53 | 172 |
| EC14-16 | 70 | 4236 | 7115 | 3045 | 8518 | 39 | 51 | 27 | 185 |
| EC16-18 | 127 | 3704 | 6498 | 2837 | 7062 | 71 | 76 | 52 | 210 |
| EC18-20 | 188 | 2623 | 4525 | 1932 | 4401 | 40 | 48 | 32 | 185 |
| EC20-22 | 0 | 1615 | 2731 | 1268 | 2415 | 36 | 46 | 25 | 209 |
| EC22-24 | 0 | 1035 | 1872 | 851 | 1274 | 45 | 58 | 12 | 259 |
| EC24-26 | 0 | 777 | 1301 | 613 | 540 | 61 | 77 | 57 | 306 |
| >EC 26 | 0 | 706 | 1590 | 737 | 100 | 1033 | 1479 | 638 | 1953 |
| **Monoaromatics (1 ring)** | | | | | | | | | |
| EC8-10 | 8321 | 7382 | 8344 | 13932 | 15588 | 569 | 856 | 190 | 888 |
| EC10-12 | 5631 | 17517 | 16538 | 17431 | 21380 | 1180 | 1805 | 526 | 1678 |
| EC12-14 | 2427 | 7124 | 11799 | 9748 | 12795 | 55 | 88 | 29 | 386 |
| EC14-16 | 1848 | 7251 | 9966 | 8290 | 13249 | 61 | 88 | 0 | 433 |
| EC16-18 | 2140 | 6833 | 10204 | 7365 | 11710 | 91 | 103 | 44 | 526 |
| EC18-20 | 1779 | 4549 | 8369 | 4878 | 7204 | 51 | 66 | 0 | 502 |
| EC20-22 | 1571 | 3136 | 8929 | 5064 | 6342 | 25 | 151 | 0 | 644 |
| EC22-24 | 1197 | 2583 | 4596 | 3205 | 2873 | 98 | 295 | 0 | 680 |
| EC24-26 | 1318 | 2771 | 4640 | 2922 | 1566 | 246 | 528 | 0 | 1011 |
| >EC26 | 5158 | 5201 | 6647 | 6822 | 772 | 1816 | 3365 | 529 | 5780 |
| **Naphthenic Monoaromatic (2 rings)** | | | | | | | | | |
| EC10-12 | 1785 | 7671 | 6578 | 6061 | 7397 | 489 | 478 | 342 | 502 |
| EC12-14 | 2038 | 11542 | 11353 | 8507 | 11387 | 186 | 136 | 22 | 347 |
| EC14-16 | 2350 | 11166 | 13076 | 9272 | 13007 | 204 | 130 | 38 | 542 |
| EC16-18 | 2008 | 8395 | 10216 | 6385 | 8326 | 99 | 26 | 12 | 406 |
| EC18-20 | 1882 | 6846 | 7244 | 5173 | 6970 | 221 | 189 | 76 | 514 |
| EC20-22 | 1392 | 4749 | 2273 | 2477 | 2179 | 148 | 71 | 0 | 396 |
| EC22-24 | 946 | 3172 | 2741 | 1627 | 1858 | 263 | 177 | 0 | 355 |
| EC24-26 | 946 | 1750 | 2261 | 1584 | 881 | 202 | 325 | 116 | 379 |
| >EC26 | 2263 | 1773 | 2671 | 3673 | 1057 | 515 | 2150 | 3813 | 2427 |
| **Diaromatic (2 rings)** | | | | | | | | | |
| EC10-12 | 262 | 1019 | 745 | 948 | 1053 | 67 | 43 | 21 | 73 |
| EC12-14 | 2096 | 9258 | 9492 | 7362 | 10176 | 359 | 288 | 246 | 496 |
| EC14-16 | 3352 | 16866 | 16138 | 12619 | 18595 | 648 | 499 | 335 | 864 |

| Diaromatic (2 rings) | | | | | | | | | |
|---|---|---|---|---|---|---|---|---|---|
| EC16-18 | 3476 | 15577 | 16924 | 11092 | 17211 | 738 | 645 | 433 | 1119 |
| EC18-20 | 3405 | 13065 | 14470 | 10593 | 15198 | 686 | 618 | 402 | 1128 |
| EC20-22 | 2377 | 7964 | 10509 | 6956 | 6943 | 514 | 668 | 389 | 1037 |
| EC22-24 | 1604 | 3517 | 5598 | 4872 | 3716 | 328 | 642 | 484 | 872 |
| EC24-26 | 1794 | 2085 | 3223 | 3332 | 1895 | 346 | 559 | 528 | 740 |
| >EC26 | 10012 | 12622 | 10992 | 11441 | 1844 | 8705 | 10097 | 4497 | 11295 |
| **Naphthenic Diaromatics (3 rings)** | | | | | | | | | |
| EC14-16 | 363 | 1404 | 1528 | 880 | 1377 | 42 | 6 | 0 | 62 |
| EC16-18 | 826 | 4124 | 3746 | 2380 | 3629 | 195 | 51 | 34 | 205 |
| EC18-20 | 1722 | 7275 | 7736 | 5626 | 6716 | 403 | 214 | 95 | 675 |
| EC20-22 | 2327 | 7801 | 7736 | 5030 | 5871 | 690 | 561 | 228 | 975 |
| EC22-24 | 2091 | 8139 | 5600 | 3050 | 3014 | 801 | 551 | 129 | 984 |
| EC24-26 | 2233 | 6608 | 5012 | 2708 | 1199 | 788 | 774 | 378 | 1515 |
| >EC26 | 5707 | 7522 | 4998 | 5348 | 921 | 3506 | 3188 | 2515 | 3188 |
| **Triaromatics (3 rings)** | | | | | | | | | |
| EC16-18 | 139 | 539 | 570 | 416 | 560 | 31 | 26 | 29 | 43 |
| EC18-20 | 1227 | 4103 | 4471 | 2987 | 4246 | 310 | 264 | 220 | 477 |
| EC20-22 | 2147 | 5936 | 6892 | 4577 | 4850 | 624 | 581 | 412 | 955 |
| EC22-24 | 1746 | 4705 | 6528 | 3892 | 3305 | 691 | 581 | 305 | 1086 |
| EC24-26 | 1895 | 3611 | 4194 | 3198 | 1730 | 887 | 941 | 646 | 1495 |
| >EC26 | 8328 | 8544 | 7177 | 9146 | 624 | 6585 | 7854 | 5224 | 8935 |
| **>3 rings - Poliaromatics** | | | | | | | | | |
| EC20-22 | 292 | 1208 | 1055 | 429 | 589 | 125 | 45 | 30 | 96 |
| EC22-24 | 958 | 2967 | 3166 | 1819 | 1078 | 831 | 511 | 128 | 1170 |
| EC24-26 | 1482 | 2631 | 3326 | 3143 | 1205 | 1648 | 1560 | 834 | 2558 |
| >EC26 | 8298 | 5211 | 4600 | 5831 | 258 | 10081 | 10801 | 6134 | 12067 |

Example 3: Hydroprocessing of Tekel oil

The qualitative analysis of metals in the Tekel oil prior to hydroprocessing was measured using EXDRF. EXDRF allowed to characterize the metal and non-metal components of the Tekel oil as follows: C%=80.4%; H%=10.8%; S%=6.7%, N%=0.6%, Al, Si, P, K, Ca <0.1%; Cl=88.3 mg/kg; Ti<0.01 %; V=339 mg/kg; Co, Cr and Mn <10 mg/kg; Fe =34.6 mg/kg; Ni=60.3 mg/kg; Nb, Pd, Ag, Cd, Sn, Pb, Cu, Zn, As, Se, Br, Rb, Sr, Y <5 mg/kg; Zr <10 mg/kg; Mo=6 mg/kg; Sb=5.7 mg/kg; Ba =143 mg/kg.

Tekel oil was hydroprocessed with and without ionic liquid catalyst. The reaction was performed at 30 bar(g) hydrogen pressure, measured at room temperature, which correspond to a similar reactor pressures as when n-dodecane was hydroprocessed at 350 °C and at a molar ratio for $H_2$/n-$C_{12}$ of 20. Three different phosphonium-based fluoride-free ionic liquids were used as catalyst, and 12500 ppm of each catalyst was added: a iron chloride based ionic liquid ($[P_{66614}][FeCl_4]$), a nickel based ionic liquid ($[P_{66614}]_2[NiCl_4]$), and a cobalt based ionic liquid ($[P_{66614}]_2[CoCl_4]$). The same reaction was also carried out without the use of a catalyst (ionic liquid catalyst or any other suitable type) as benchmark. The hydroprocessing reaction time was 1 hour and the process temperature was 350 °C for all reactions.

The reaction product, i.e. the hydroprocesses Tekel oil, comprised three fractions: a solid phase, a liquid phase and a gaseous phase. Table 8 shows the weight fraction in percent (weight percentage) of each phase (solid, liquid and gaseous) in the reaction products. The gaseous phase was collected at room temperature. The liquid phase comprises lighter oil fractions. The solid phase was a sticky solid. The total conversion rate is the sum of the gaseous fraction and the liquid fraction, because these are the phases that are preferably obtained, while a good conversion efficiency corresponds to a limited fraction of solid phase.

It is clear from Table 8 that the total conversion rate of Tekel oil is similar for the hydroprocessing reactions performed in the presence of an ionic liquid catalyst (i.e. according to the invention) compared to the same reaction without any catalyst. However, as will become clear further, the liquid phase and gaseous phase of the reaction products from the hydroprocessing in the presence of an ionic liquid catalyst have a different composition than those of the reaction without a catalyst, and comprise more shorter and/or lighter components.

Table 8: weight percentage of each phase in the reaction product from Tekel oil

| $H_2$ pressure | Catalyst | Solid phase | Hardness solid phase | Liquid phase | Colour liquid phase | Gaseous phase | Total conversion |
|---|---|---|---|---|---|---|---|
| 30 bar(g) | Co-based | 33.58% | Hard | 19.41% | Transparent brownish-yellow | 47.01% | 66.43% |
| 30 bar(g) | Fe-based | 35.16% | Soft | 21.11% | Transparent yellow | 43.73% | 64.84% |
| 30 bar(g) | Ni-based | 33.91 % | Medium hard | 17.45% | Slightly transparent to yellow | 48.64% | 66.09% |
| 30 bar(g) | - | 37.39% | Hard | 6.63% | Transparent yellow | 55.98% | 62.62% |

The gaseous phase of the reaction products was analysed by means of GC-MS. Table 9 presents the weight fraction in percent (weight percentage) of the detected gaseous molecules.

Table 9: weight percentage of each molecule in the gaseous phase of the reaction product from Tekel oil

| Gases | No catalyst | Co-based | Fe-based | Ni-based |
|---|---|---|---|---|
| Ethene | 0.83 | 0.36 | 0.5 | 0.56 |
| Ethane | 8.38 | 4.88 | 4.1 | 3.49 |
| Hydrogen Sulfide | 15.60 | 8.04 | 8.6 | 7.32 |
| Propene | 4.78 | 2.36 | 2.0 | 3.18 |
| Propane | 13.00 | 7.43 | 6.3 | 6.8 |
| Isobutane | 2.02 | 1.17 | 1.1 | 1.1 |
| Butene | 9.85 | 5.34 | 4.7 | 5.02 |
| Butane | 10.55 | 6.91 | 5.7 | 6.2 |
| Methylbutene | 3.53 | 2.68 | 2.6 | 2.6 |
| Methylbutane | 4.86 | 4.51 | 4.0 | 4.26 |
| 1-Pentene | 3.33 | 2.48 | 2.4 | 2.44 |
| Pentane | 7.84 | 7.85 | 7.0 | 7.4 |
| Dimethylbutane | 0.58 | 0.97 | 0.9 | 0.93 |
| Cyclopentene | 0.17 | 0.16 | 0.2 | 0.18 |
| Methylpentene | 0.75 | 0.94 | 0.12 | 0.53 |
| cyclopentane | 0.43 | 0.58 | 0.5 | 0.54 |
| Methylpentane | 4.17 | 7.53 | 7.2 | 7.3 |
| Methylpentene + 1-Hexene | 0.89 | 3.34 | 2.1 | 2.72 |
| Hexane | 3.46 | 10.09 | 8.7 | 9.3 |

(continued)

| Gases | No catalyst | Co-based | Fe-based | Ni-based |
|---|---|---|---|---|
| 1-Hexene | 0.24 | 0.82 | 0.6 | 0.71 |
| methylcyclopentene | 0.28 | 0.44 | 0.6 | 0.52 |
| dimethyl pentane | 0.39 | 1.1 | 1.3 | 1.2 |
| Methylcyclopentane | 0.68 | 1.79 | 1.8 | 1.395 |
| dimethylpentene | 0.03 | 0.07 | | 0.035 |
| Benzene | 0.13 | 0.42 | 0.4 | 0.41 |
| Methylhexene | 0.01 | 0.03 | 0.0 | 0.015 |
| Cyclohexane | 0.25 | 0.88 | 0.9 | 0.89 |
| Methylhexane | 0.91 | 3.79 | 4.3 | 4.0 |
| Dimethylcyclopentane | 0.4 | 1.66 | 2 | 1.83 |
| Methylhexene | 0.01 | 0.03 | | 0.01 |
| Heptene | 0.03 | 0.07 | 0.1 | 0 |
| Heptane | 0.80 | 3.88 | 4.9 | 4.3 |
| Dimethylcyclopentene | 0.05 | 0.15 | 0.2 | 0.1 |
| Methylcyclohexane | 0.15 | 1.03 | 1.1 | 1. |
| Dimethylcyclohexane | 0.04 | 0.4 | 0.7 | 0.55 |
| Dimethylcyclohexane + Ethylcyclopentane | 0.08 | 0.55 | 0.7 | 0.6 |
| Heptyne | | 0.01 | | 0 |
| trimethylcyclopentane | 0.03 | 0.32 | 0.6 | 0.36 |
| Toluene | 0.05 | 0.42 | 0.6 | 0.41 |
| Methylheptane | 0.17 | 1.55 | 2.6 | 1.3 |
| Methylcyclohexene | - | | | 0 |
| Ethylhexane | | | | 0 |
| Methyl-ethyl-cyclopentane | 0.01 | 0.17 | 0.3 | 0.2 |
| Octane | 0.10 | 0.99 | 1.9 | 0 |
| Dimethylheptane | | 0.11 | 0.2 | 1.2 |
| Ethylcyclohexane | | 0.10 | 0.2 | 0.15 |
| Trimethylcyclohexane | | | | 0.15 |
| Ethylbenzene | | 0.12 | 0.3 | 0 |
| m+p-xylene | 0.01 | 0.26 | 0.7 | 0.21 |
| o-xylene | 0.02 | 0.04 | 0.1 | 0.48 |
| methyl propylcyclopentane | | | 0.1 | 0.07 |
| nonane | 0.01 | 0.12 | 0.4 | 0.05 |
| Decane | 0.01 | | | 0.26 |
| Dodecane | 0.04 | 0.12 | 0.1 | 0 |
| Others/unidentified | 0.06 | 0.88 | 0.44 | 0.11 |

The liquid phase and the solid phase of the reaction products was analysed by means of 2D-GC. Table 10 presents the weight fraction of every component that was detected for the reactions at 30 bar(g) hydrogen pressure and with the three tested ionic liquid catalysts and without the use of a catalyst, as well as for the Tekel oil prior to hydro-processing ("no hydroprocessing"). The weight fraction of the liquid components is expressed as the weight of the liquid component (in mg) per kg liquid phase. The weight fraction of the solid components is expressed as the weight of every solid component (in mg) per kg solid phase.

Regarding the liquid phase, it is clear from Table 10 that the weight fraction of shorter chain alkanes (especially up to $C_{20}$-$C_{22}$), expressed in mg (liquid) component per kg liquid phase, is significantly higher in the reaction products than in the Tekel oil, for both the reactions with and without catalyst. Hence, the liquid phase obtained upon hydro-processing in the presence of an ionic liquid catalyst comprises a significant fraction of shorter chain molecules (weight-based). The liquid phases obtained with an ionic liquid catalyst further comprise a lower weight fraction of alkanes having more than 30 carbon atoms in the liquid phase (EC>30) than the liquid phase of the reaction product of the hydroprocessing reaction without catalyst. Consequently, the liquid phases obtained upon hydroprocessing according to the invention are considered to have a more favorable composition than the liquid phase obtained without use of a catalyst in the hydroprocessing reaction.

Regarding the solid phase, it is clear from Table 10 that the weight fraction of alkanes having more than 30 carbon atoms (EC>30), expressed in mg (solid) component per kg solid phase, is slightly higher in the solid phase of the reaction product of the reaction without catalyst compared to the AGT crude oil prior to hydroprocessing. However, for the solid phase obtained with any one of the three ionic liquid catalysts, and in particular the cobalt-based ionic liquid catalyst (column Co), the weight fraction of shorter chain components in the solid phase has increased and the weight fraction of alkanes having more than 30 carbon atoms has decreased compared to the solid phase of the reaction product from the hydroprocessing without catalyst. This indicates that the solid phase of the reactions performed with an ionic liquid catalyst comprise more shorter and ligher molecules, reducing the viscosity and hardness of the solid phase and making the solid phase thus easier to handle.

Table 10: weight fraction (mg/kg) of components detected in the liquid and solid phase of reaction product from Tekel oil

| Class | No hydro-processing | Liquid phase | | | | Solid phase | | | |
|---|---|---|---|---|---|---|---|---|---|
| | | Co | Fe | Ni | - | Co | Fe | Ni | - |
| Alkanes | mg/kg | mg/kg | mg/kg | mg/kg | mg/kg | mg/kg | mg/kg | mg/kg | mg/kg |
| EC8-10 | 17130 | 56978 | 45726 | 42921 | 17586 | 387 | 672 | 483 | 463 |
| EC10-12 | 14261 | 54505 | 43237 | 30328 | 32238 | 821 | 1571 | 1030 | 814 |
| EC12-14 | 14775 | 68063 | 64416 | 34189 | 37366 | 863 | 1981 | 1164 | 990 |
| EC14-16 | 13496 | 62504 | 49361 | 50259 | 34537 | 932 | 1888 | 1018 | 1114 |
| EC16-18 | 10735 | 39647 | 39773 | 31802 | 33851 | 867 | 1576 | 992 | 958 |
| EC18-20 | 6778 | 29882 | 23771 | 23514 | 23427 | 581 | 987 | 717 | 688 |
| EC20-22 | 5304 | 20478 | 15818 | 14797 | 18249 | 512 | 792 | 687 | 595 |
| EC22-24 | 4067 | 14035 | 10594 | 9402 | 14740 | 481 | 686 | 723 | 583 |
| EC24-26 | 3245 | 10741 | 8007 | 6630 | 12457 | 502 | 791 | 829 | 711 |
| EC26-28 | 2479 | 7405 | 4951 | 4367 | 8776 | 514 | 808 | 903 | 864 |
| EC28-30 | 1789 | 4995 | 3461 | 2645 | 6155 | 576 | 890 | 957 | 999 |
| EC>30 | 7397 | 12509 | 8229 | 5159 | 14000 | 4786 | 6852 | 6846 | 7960 |
| Cycloalkanes | | | | | | | | | |
| EC8-10 | 665 | 8165 | 6396 | 10501 | 3860 | 37 | 191 | 117 | 50 |
| EC10-12 | 5375 | 77198 | 46214 | 55006 | 14465 | 248 | 800 | 428 | 371 |
| EC12-14 | 5302 | 42582 | 31314 | 54281 | 21080 | 321 | 1160 | 568 | 495 |
| EC14-16 | 2789 | 30483 | 17687 | 27233 | 19169 | 110 | 625 | 349 | 219 |
| EC16-18 | 4591 | 30786 | 21407 | 23041 | 22425 | 321 | 873 | 541 | 435 |
| EC18-20 | 3835 | 20629 | 15112 | 15245 | 18529 | 314 | 772 | 578 | 487 |

(continued)

| Cycloalkanes | | | | | | | | | |
|---|---|---|---|---|---|---|---|---|---|
| EC20-22 | 3309 | 17594 | 11743 | 11003 | 16510 | 353 | 659 | 572 | 446 |
| EC22-24 | 2111 | 10740 | 7179 | 5995 | 11432 | 339 | 574 | 597 | 419 |
| EC24-26 | 1489 | 7909 | 4719 | 4034 | 8526 | 303 | 510 | 605 | 532 |
| EC26-28 | 1646 | 6514 | 4702 | 3110 | 7880 | 459 | 910 | 973 | 873 |
| EC28-30 | 2011 | 5811 | 3773 | 2903 | 6994 | 771 | 1409 | 1511 | 1531 |
| EC>30 | 3047 | 5816 | 2624 | 1787 | 6243 | 1664 | 4035 | 4315 | 4143 |
| **Alkenes** | | | | | | | | | |
| EC8-10 | 281 | 3310 | 3570 | 2898 | 2581 | 91 | 183 | 113 | 142 |
| EC10-12 | 146 | 3755 | 4234 | 3596 | 3840 | 56 | 120 | 72 | 105 |
| EC12-14 | 0 | 5277 | 4863 | 5535 | 4287 | 65 | 146 | 132 | 106 |
| EC14-16 | 33 | 2923 | 3181 | 2881 | 3740 | 34 | 93 | 57 | 61 |
| EC16-18 | 36 | 2758 | 2971 | 2452 | 3957 | 70 | 96 | 71 | 84 |
| EC18-20 | 0 | 1895 | 2033 | 1617 | 2961 | 32 | 64 | 42 | 43 |
| EC20-22 | 0 | 1346 | 1377 | 1112 | 2316 | 33 | 50 | 42 | 56 |
| EC22-24 | 0 | 888 | 920 | 699 | 1759 | 33 | 46 | 46 | 52 |
| EC24-26 | 0 | 648 | 656 | 350 | 1316 | 40 | 55 | 61 | 75 |
| >EC 26 | 0 | 748 | 653 | 401 | 2683 | 334 | 988 | 833 | 1243 |
| **Monoaromatics** | | | | | | | | | |
| EC8-10 | 5222 | 3037 | 2255 | 1535 | 1673 | 664 | 397 | 320 | 350 |
| EC10-12 | 5281 | 5515 | 6393 | 3502 | 7855 | 1163 | 708 | 619 | 870 |
| EC12-14 | 2645 | 4342 | 3817 | 2554 | 5476 | 69 | 263 | 65 | 120 |
| EC14-16 | 1808 | 4076 | 3760 | 2604 | 6065 | 77 | 251 | 112 | 101 |
| EC16-18 | 1894 | 4157 | 3835 | 2888 | 6150 | 31 | 241 | 66 | 88 |
| EC18-20 | 1484 | 3617 | 3087 | 1847 | 5076 | 0 | 227 | 98 | 83 |
| EC20-22 | 1511 | 3247 | 2963 | 1587 | 4588 | 0 | 240 | 119 | 103 |
| EC22-24 | 947 | 2265 | 2002 | 1031 | 3667 | 0 | 201 | 196 | 212 |
| EC24-26 | 1174 | 2155 | 1934 | 1016 | 3116 | 27 | 272 | 265 | 306 |
| >EC26 | 4450 | 4249 | 3437 | 1250 | 6226 | 1264 | 1820 | 1724 | 1797 |
| **Naphthenic monoaromatics** | | | | | | | | | |
| EC10-12 | 2142 | 5370 | 4231 | 3582 | 2602 | 861 | 405 | 444 | 545 |
| EC12-14 | 2910 | 9472 | 7191 | 5409 | 5458 | 162 | 308 | 186 | 203 |
| EC14-16 | 2380 | 8390 | 6533 | 5012 | 5278 | 55 | 310 | 106 | 100 |
| EC16-18 | 1875 | 5977 | 5025 | 3775 | 5164 | 13 | 231 | 96 | 11 |
| EC18-20 | 1448 | 4642 | 3612 | 2944 | 4418 | 51 | 208 | 123 | 64 |
| EC20-22 | 927 | 2061 | 1450 | 1012 | 2651 | 0 | 112 | 35 | 15 |
| EC22-24 | 837 | 1286 | 980 | 666 | 1657 | 0 | 84 | 112 | 66 |
| EC24-26 | 576 | 1249 | 1121 | 646 | 1279 | 64 | 148 | 158 | 164 |
| >EC26 | 749 | 3712 | 3429 | 1691 | 8639 | 3351 | 3753 | 1901 | 3307 |

(continued)

| Diaromatics | | | | | | | | | |
|---|---|---|---|---|---|---|---|---|---|
| EC10-12 | 253 | 814 | 810 | 817 | 573 | 81 | 72 | 58 | 68 |
| EC12-14 | 1872 | 8182 | 7556 | 7906 | 5559 | 326 | 532 | 397 | 370 |
| EC14-16 | 3471 | 14366 | 14813 | 15281 | 11495 | 556 | 984 | 674 | 640 |
| EC16-18 | 3407 | 13898 | 13525 | 13358 | 12372 | 628 | 949 | 747 | 744 |
| EC18-20 | 3295 | 12267 | 12781 | 11941 | 13871 | 622 | 922 | 813 | 815 |
| EC20-22 | 2347 | 8216 | 8170 | 7309 | 9732 | 554 | 718 | 719 | 658 |
| EC22-24 | 1166 | 4171 | 4227 | 4322 | 7610 | 581 | 728 | 667 | 731 |
| EC24-26 | 586 | 2362 | 1988 | 1575 | 7283 | 658 | 901 | 562 | 921 |
| >EC26 | 10389 | 12070 | 11068 | 7781 | 13714 | 5583 | 7192 | 9101 | 9080 |
| **Naphthenic diaromatics** | | | | | | | | | |
| EC14-16 | 183 | 958 | 932 | 1001 | 726 | 0 | 50 | 37 | 32 |
| EC16-18 | 620 | 2314 | 2324 | 2211 | 1990 | 44 | 128 | 95 | 67 |
| EC18-20 | 1357 | 5496 | 5496 | 5084 | 5402 | 95 | 390 | 390 | 269 |
| EC20-22 | 2047 | 5597 | 5185 | 5108 | 6367 | 297 | 549 | 568 | 478 |
| EC22-24 | 2664 | 4313 | 4311 | 3590 | 4070 | 73 | 454 | 658 | 422 |
| EC24-26 | 2969 | 4443 | 4240 | 3048 | 2124 | 261 | 374 | 834 | 409 |
| >EC26 | 5231 | 4348 | 4335 | 3083 | 7256 | 2695 | 2205 | 2340 | 2888 |
| **Triaromatics** | | | | | | | | | |
| EC16-18 | 105 | 366 | 372 | 369 | 358 | 32 | 29 | 27 | 25 |
| EC18-20 | 847 | 3013 | 3266 | 2932 | 3579 | 228 | 313 | 262 | 295 |
| EC20-22 | 1413 | 4435 | 4109 | 3621 | 5392 | 274 | 525 | 566 | 545 |
| EC22-24 | 1380 | 3639 | 3312 | 2815 | 4666 | 214 | 500 | 516 | 535 |
| EC24-26 | 1334 | 3227 | 2990 | 2424 | 4400 | 543 | 716 | 817 | 830 |
| >EC26 | 7351 | 9191 | 8230 | 5191 | 11563 | 5202 | 6983 | 7542 | 7791 |
| **Polyaromatics** | | | | | | | | | |
| EC20-22 | 202 | 638 | 630 | 570 | 896 | 26 | 52 | 52 | 46 |
| EC22-24 | 400 | 1871 | 1676 | 1097 | 2861 | 78 | 461 | 432 | 427 |
| EC24-26 | 708 | 2739 | 2076 | 1759 | 4650 | 192 | 1246 | 1288 | 1392 |
| >EC26 | 5293 | 5076 | 3763 | 2319 | 7105 | 5218 | 8255 | 9404 | 9788 |

**Claims**

1. Method for the hydroprocessing of an organic compound, comprising subjecting the organic compound to a hydro-processing reaction in the presence of hydrogen and a catalyst, **characterised in that** the catalyst comprises a fluoride-free ionic liquid.

2. Method according to claim 1, wherein the organic compound comprises a hydrocarbon or a mixture of hydrocarbons.

3. Method according to claim 2, wherein the hydrocarbon is a heavy hydrocarbon or an extra heavy hydrocarbon.

4. Method according to any one of the preceding claims, wherein the organic compound is a heavy crude oil or an extra heavy crude oil.

5. Method according to any one of the preceding claims, wherein the fluoride-free ionic liquid is a phosphonium based ionic liquid.

6. Method according to claim 5, wherein the phosphonium based ionic liquid comprises a phosphonium cation of the formula $[P_{R1,R2,R3,R4}]^+$, wherein R1, R2, R3 and R4 are independently a hydrocarbon group comprising a hydrocarbon main chain comprising between 1 and 25 carbon atoms.

7. Method according to any one of the preceding claims, wherein the ionic liquid comprises a metal chloride anion, wherein the metal is selected from the group of transition metals, preferably wherein the metal is Ni, Co or Fe.

8. Method according to any one of the preceding claims, wherein the fluoride-free phosphonium based ionic liquid is selected from the group consisting of trihexyltetradecylphosphonium iron tetrachloride, bis(trihexyltetradecylphosphonium) nickel tetrachloride and bis(trihexyltetradecylphosphonium) cobalt tetrachloride.

9. Method according to any one of the preceding claims, wherein the hydroprocessing reaction is performed at a pressure between 20 bar and 200 bar, preferably between 30 bar and 100 bar, more preferably between 50 bar and 85 bar.

10. Method according to any one of the preceding claims, wherein the hydroprocessing reaction is performed at a temperature between 250 °C and 500 °C, preferably between 320 °C and 380 °C, more preferably between 345 °C and 375 °C.

11. Method according to any one of the preceding claims, wherein the hydroprocessing reaction is carried out with a mass ratio of the ionic liquid to the organic compound between 0.01 g per kg and 100 g per kg, preferably between 0.1 g and 50 g per kg, more preferably between between 0.5 g per kg and 20 g per kg, more preferably between 1 g per kg and 5 g per kg.

12. Method according to any one of the preceding claims, wherein the organic compound comprises a hydrocarbon or a mixture of hydrocarbons, wherein hydrogen and the hydrocarbon or the mixture of hydrocarbons are supplied to the hydroprocessing reaction in proportions of at least 3.5 to 100 parts by weight hydrogen to hydrocarbon (mixture).

13. Method according to any one of the preceding claims, wherein the hydroprocessing reaction is selected from the group consisting of hydrocracking, hydrodesulphurization, hydrodenitrogenation, hydrodemetallization, hydrogenation, and a combination thereof.

14. Method according to claim any one of the preceding claims, wherein the organic compound is a heavy crude oil or an extra heavy crude oil and wherein the hydroprocessing reaction is performed in an oil well.

15. Method according to any one of the preceding claims, wherein the organic compound is a heavy crude oil or an extra heavy crude oil, the method comprising the following steps:

- partially extracting the organic compound from the oil well;
- hydroprocessing of the extracted organic compound to obtain a hydroprocessed oil or a hydroprocessed organic compound;
- injection of the hydroprocessed oil back into the oil well.

Fig. 1

Fig. 2

Fig. 3

Europäisches
Patentamt

European
Patent Office

Office européen
des brevets

# EUROPEAN SEARCH REPORT

Application Number

EP 20 19 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAU-TO WONG ET AL: "Organic solvent nanofiltration in asymmetric hydrogenation: enhancement of enantioselectivity and catalyst stability by ionic liquids", CHEMICAL COMMUNICATIONS, no. 19, 1 January 2006 (2006-01-01), page 2063, XP055261994, ISSN: 1359-7345, DOI: 10.1039/b602184k * figures 1-4; tables 1-3 * * page 2063 - page 2065 * ----- | 1-15 | INV. C10G45/04 C10G47/02 C10G49/02 B01J35/12 B01J27/14 E21B43/00 |
| X | US 2014/001092 A1 (MEZZA BECKAY J [US] ET AL) 2 January 2014 (2014-01-02) * examples 1-9 * * tables 1-6 * * paragraphs [0027] - [0055] * * claim 4 * ----- | 1-15 | |

|  |
|---|
| TECHNICAL FIELDS SEARCHED (IPC) |
| C10G B01J E21B |

The present search report has been drawn up for all claims

| Place of search | Date of completion of the search | Examiner |
|---|---|---|
| The Hague | 25 January 2021 | Bernet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 2241

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2021

| Patent document cited in search report | Publication date | Patent family member(s) | Publication date |
|---|---|---|---|
| US 2014001092 A1 | 02-01-2014 | NONE | |

For more details about this annex : see Official Journal of the European Patent Office, No. 12/82

**EP 3 957 704 A1**

**REFERENCES CITED IN THE DESCRIPTION**

**Patent documents cited in the description**

- WO 2012040358 A
- US 8758600 B
- US 8821716 B
- CA 2708416